# EUROPEAN PATENT APPLICATION

(11) **EP 4 806 252 A1**
(43) Date of publication of application: **16.09.2026**
(21) Application number: 24899798.3
(22) Date of filing: 03.12.2024
(51) Int. Cl.: A01D 43/063

(54) **GRASS COLLECTION DEVICE AND MOWING APPARATUS**

(30) Priority: 09.12.2023 CN 202323366835 U; 09.12.2023 CN 202323367007 U; 27.12.2023 CN 202323604616 U; 27.12.2023 CN 202323585941 U
(71) Applicant: Shenzhen Mammotion Innovation Co., Limited, Shenzhen, Guangdong 518000 (CN)
(72) Inventor: WEI, Jidong, Shenzhen, Guangdong 518000 (CN); XU, Yuanjun, Shenzhen, Guangdong 518000 (CN); ZHOU, Chunhui, Shenzhen, Guangdong 518000 (CN)
(74) Representative: Huang, Liwei
(86) International application number: PCT/CN2024/136360
(87) International publication number: WO 2025/119160

(57) **Abstract**

The present disclosure provides a grass collection apparatus (1000) and a lawn mowing device. The grass collection apparatus (1000) comprises a grass collection bracket (100), a grass collection box (200), and a swing module (300). The grass collection box (200) is rotatably connected to the grass collection bracket (100) through the swing module (300). The grass collection bracket (100) comprises a bracket body (110) and a mounting protrusion (120). The bracket body (110) is configured to be connected to a lawn mower. The mounting protrusion (120) protrudes from a top portion of the bracket body (110), and is located at a rear portion of the bracket body (110). The mounting protrusion (120) is internally provided with a swing module (300) configured to be mounted to drive the grass collection box (200) to swing relative to the grass collection bracket (100). By adopting the grass collection apparatus (1000) of the present disclosure, a structure distribution is reasonable and compact, grass discharging efficiency is improved, and space utilization is improved.

## Description

This application claims priority to Chinese Patent Application No. 202323367007.0, filed with the Chinese Patent Office on December 9, 2023, entitled "Grass Collection Box, Grass Collection Apparatus, and Lawn Mowing Device", Chinese Patent Application No. 202323366835.2, entitled "Grass Collection Bracket, Grass Collection Apparatus, and Lawn Mowing Device", Chinese Patent Application No. 202323585941.X, entitled "Swing Module, Grass Collection Apparatus, and Lawn Mowing Device", and Chinese Patent Application No. 202323604616.3, entitled "Swing Module, Grass Collection Apparatus, and Lawn Mowing Device", the entire contents of all of which are incorporated herein by reference.

### TECHNICAL FIELD

The present disclosure relates to the technical field of lawn mowing machinery, and in particular, to a grass collection apparatus and a lawn mowing device.

### BACKGROUND TECHNOLOGY

A grass collection apparatus of a lawn mowing device is configured to store grass clippings cut by a lawn mower into a grass collection box. Implementations of some existing techniques or designs involve a swing module mounted on two side walls of a grass collection bracket, which causes a relatively large space required for the grass collection bracket to mount the swing module, resulting in low space utilization and non-compact structure of the grass collection bracket.

### SUMMARY

The present disclosure provides a grass collection apparatus and a lawn mowing device, to solve the technical problems of low space utilization and non-compact structure of the grass collection bracket existing in the background technology.

In a first aspect, the present disclosure provides a grass collection apparatus, comprising a grass collection bracket, a grass collection box, and a swing module. The grass collection box is rotatably connected to the grass collection bracket through the swing module. The grass collection bracket includes a bracket body and a mounting protrusion. The bracket body is configured to be connected to a lawn mower. The mounting protrusion protrudes from a top portion of the bracket body, and is located at a rear portion of the bracket body. The swing module is provided in the mounting protrusion.

In a possible implementation, in combination with the first aspect, a mounting cavity for accommodating the swing module is provided in the mounting protrusion, and a mounting hole communicating with the mounting cavity is provided on a side of the bracket body facing away from the mounting protrusion.

In a possible implementation, in combination with the first aspect, the grass collection bracket further includes a cover plate covering the mounting hole.

In a possible implementation, in combination with the first aspect, along a width direction of the grass collection bracket, a shaft hole communicating with the mounting cavity is provided at an end of the mounting protrusion facing away from the bracket body, and two ends of the swing module extend through the shaft hole and protrude from the shaft hole.

In a possible implementation, in combination with the first aspect, the bracket body includes a first bracket body and a second bracket body connected to the first bracket body, the second bracket body protrudes beyond a rear portion of the first bracket body in a length direction of the grass collection bracket, and is suspended relative to a bottom of the first bracket body in a height direction of the grass collection bracket, and the mounting protrusion is provided on the second bracket body.

In a possible implementation, in combination with the first aspect, a top surface of the mounting protrusion facing away from the bracket body is configured as a curved surface.

In a possible implementation, in combination with the first aspect, a detector is provided on a side wall of the mounting protrusion facing the grass collection box.

In a possible implementation, in combination with the first aspect, the grass collection bracket further includes a handle, one end of the handle is fixed to the mounting protrusion, and the other end of the handle is fixed to the bracket body.

In a possible implementation, in combination with the first aspect, a positioning structure is provided on the bracket body and/or the mounting protrusion, and a guiding structure mating with the positioning structure is provided on the handle.

In a possible implementation, in combination with the first aspect, the positioning structure includes a positioning column and/or a positioning hole, the guiding structure is configured as a connecting rod engaged with the positioning column and/or inserted into the positioning hole, and the positioning column is locked to the connecting rod by a locking structure.

In a possible implementation, in combination with the first aspect, a limiting groove is defined in the mounting protrusion, one end of the handle is inserted into the limiting groove, and the positioning structure is provided in the limiting groove.

In a possible implementation, in combination with the first aspect, a limiting protrusion is provided on a side of the mounting protrusion facing the handle, the limiting protrusion is provided with a limiting groove, one end of the handle is inserted into the limiting groove and is limited by the limiting protrusion in a height direction of the grass collection bracket.

In a possible implementation, in combination with the first aspect, the grass collection bracket further includes a top cover, the top cover covers a top portion of the bracket body, and the mounting protrusion and the handle pass through and protrude from the top cover.

In a possible implementation, in combination with the first aspect, the grass collection bracket further includes two mounting arms, the two mounting arms are provided on two sides of the bracket body in a width direction of the grass collection bracket, and are configured to mount a floating mechanism.

In a possible implementation, in combination with the first aspect, a mounting space is provided on a side of the bracket body facing away from the mounting protrusion, and the mounting space is configured for mounting the lawn mower.

In a possible implementation, in combination with the first aspect, the grass collection box includes a box body and a carrying handle, a rotating arm protrudes from a top of the box body, the rotating arm is configured to be rotatably connected to the swing module of the grass collection apparatus, and the rotating arm, together with the box body, is driven by the swing module to pivot relative to the grass collection bracket of the grass collection apparatus together with the box body; and the carrying handle is provided on the box body and is located close to the rotating arm, and the carrying handle is configured to drive the box body to pivot relative to the grass collection bracket.

In a possible implementation, in combination with the first aspect, the rotating arm is provided at two side portions of the box body in a width direction of the grass collection box, and the carrying handle is located between the two rotating arms.

In a possible implementation, in combination with the first aspect, the box body includes a box housing, a box cover, and a pressing cover, the box cover is fixedly connected to the box housing and forms a grass collection cavity, the pressing cover is provided in the grass collection cavity and forms an enclosed space with the box cover, the carrying handle includes a gripping portion and a bent portion, the gripping portion is located outside the grass collection cavity, and the bent portion is bent relative to the gripping portion and is provided in the enclosed space.

In a possible implementation, in combination with the first aspect, a side of the box body facing the grass collection bracket is provided with a first avoidance groove, and the rotating arm extends from the box body toward the swing module and is located above the first avoidance groove.

In a possible implementation, in combination with the first aspect, a second clearance groove is recessed in a groove bottom wall of the first clearance groove of the box body, and the bent portion passes through a groove side wall of the second clearance groove and extends into the enclosed space.

In a possible implementation, in combination with the first aspect, the second clearance groove has a trapezoidal shape.

In a possible implementation, in combination with the first aspect, the bent portion includes a first bent section and a second bent section, the first bent section is connected between the gripping portion and the second bent section, the first bent section is located at one side of the gripping portion in a width direction of the grass collection apparatus, and the second bent section and the gripping portion are located on the same side of the first bent section in a length direction of the grass collection box.

In a possible implementation, in combination with the first aspect, the gripping portion includes a first gripping section and a second gripping section connected between the first gripping section and the bent portion, the first gripping section is spaced apart from the box body, and the second gripping section is inclined relative to a top wall of the box body.

In a possible implementation, in combination with the first aspect, in a height direction of the grass collection box, a side of the rotating arm facing the box body is provided with a semi-open groove mating with the swing module.

In a possible implementation, in combination with the first aspect, the grass collection apparatus further includes a detector, and the detector is provided at a top portion of a side of the grass collection bracket facing the grass collection box, and is located on a side of the box body facing away from the rotating arm.

In a possible implementation, in combination with the first aspect, a side wall of the detector facing the pressing cover is inclined in a direction away from the pressing cover.

In a possible implementation, in combination with the first aspect, the swing module includes a mounting bracket, a swing component, and a driving component, an accommodating cavity is provided in the mounting bracket, and the mounting bracket is fixed to the grass collection bracket; the swing component is provided on the mounting bracket and is located outside the accommodating cavity; and the driving component is provided in the accommodating cavity and is drivingly connected to the swing component, and the driving component and the swing component are arranged in a height direction of the swing module and are located below the swing component.

In a possible implementation, in combination with the first aspect, the mounting bracket includes a first bracket and a second bracket fixedly coupled to each other, the first bracket is fixed to the grass collection bracket and forms a swing cavity with the grass collection bracket, the swing component is provided in the swing cavity, and the first bracket and the second bracket form the accommodating cavity.

In a possible implementation, in combination with the first aspect, a movable hole is provided on the first bracket, the swing component includes a swing rod and a transmission gear provided on the swing rod, the driving component includes a driving member and an output gear connected to the driving member, the output gear is exposed to the movable hole and meshes with the transmission gear, and the driving member is configured to drive the output gear to drive the transmission gear to rotate.

In a possible implementation, in combination with the first aspect, a limiting hole is further provided on the first bracket, the swing component further includes a limiting rod provided on the swing rod, and the limiting rod swingably extends through the limiting hole.

In a possible implementation, in combination with the first aspect, the movable hole and the limiting hole are respectively provided at two opposite ends of the first bracket in a width direction of the swing module.

In a possible implementation, in combination with the first aspect, the first bracket extends outward relative to the second bracket in a width direction of the swing module and forms a first extension portion and a second extension portion, the first extension portion is provided with the movable hole, and the second extension portion is provided with the limiting hole.

In a possible implementation, in combination with the first aspect, the swing module further includes a sensing component, and the sensing component is configured to sense a swing angle of the limiting rod relative to the mounting bracket.

In a possible implementation, in combination with the first aspect, a fixing structure is provided on the first bracket and/or the second bracket, the sensing component further includes a first sensing member and a second sensing member, the first sensing member is provided at an end of the limiting rod away from the swing rod, and the second sensing member is fixed to the fixing structure.

In a possible implementation, in combination with the first aspect, the sensing component further includes a circuit board fixedly connected to the fixing structure, and the second sensing member is provided on the circuit board.

In a possible implementation, in combination with the first aspect, a clamping groove is defined in a position of the first bracket close to the limiting hole to form the fixing structure, and the circuit board is clamped in the clamping groove.

In a possible implementation, in combination with the first aspect, a side of the first bracket facing away from the second bracket is defined in a positioning groove, and a positioning protrusion movably mating with the positioning groove protrudes from the swing rod.

In a possible implementation, in combination with the first aspect, the first bracket is provided with a limiting structure, and the second bracket is provided with a mating structure mating with the limiting structure.

In a possible implementation, in combination with the first aspect, the first bracket is provided with a fixing plate for fixing the driving member, the fixing plate protrudes from the first bracket toward the second bracket, and is provided with the limiting structure.

In a possible implementation, in combination with the first aspect, the swing module is configured to drive the grass collection box to swing relative to the grass collection bracket, the swing component includes a swing rod and swing wings, the swing wings are provided at two ends of the swing rod respectively, the swing wings extends along a radial direction of the swing rod, and is configured for detachable mounting of the grass collection box; and the driving component is drivingly connected to the swing rod, and is configured to drive the swing rod to swing synchronously with the swing wings and the grass collection box.

In a possible implementation, in combination with the first aspect, the swing wings are provided on a side of the swing rod facing the grass collection box.

In a possible implementation, in combination with the first aspect, a height of each of the swing wings along a height direction of the swing module gradually decreases from the swing rod toward a direction away from the swing rod.

In a possible implementation, in combination with the first aspect, the swing component further includes a reinforcing rib, and the reinforcing rib is provided at a connection position between one of the swing wings and the swing rod, and is located on a side of one of the swing wings close to the grass collection bracket.

In a possible implementation, in combination with the first aspect, the driving component includes a driving member and an output gear, the output gear is drivingly connected to the driving member, the swing component further includes a transmission gear, the transmission gear meshes with the output gear, and the transmission gear is fixed to the swing rod.

In a possible implementation, in combination with the first aspect, the swing rod includes a connecting rod and a swing arm connected to each of two ends of the connecting rod, at least one end of the connecting rod is provided with a positioning protrusion for positioning the transmission gear, and each of the swing arms is provided with the swing wings.

In a second aspect, the present disclosure provides a lawn mowing device. The lawn mowing device includes a lawn mower and the grass collection apparatus described above, and the grass collection apparatus is mounted on the lawn mower.

According to the grass collection apparatus and the lawn mowing device provided by the present disclosure, based on the mounting protrusion protruding from the bracket body, and the mounting cavity provided in the mounting protrusion, the mounting cavity is configured for mounting the swing module for driving the grass collection box to swing relative to the grass collection bracket. Thus, on the one hand, the mounting protrusion can be configured to adjust a mounting height of the swing module, thereby avoiding wasting the assembly space of the grass collection bracket, achieving a reasonable and compact structure distribution, increasing a height of a rotation point, and improving grass discharging efficiency; on the other hand, providing the swing module at the top of the grass collection bracket reduces a swing area of the swing module relative to an inside of the grass collection bracket, reduces an occupied volume of the swing module, and improves space utilization.

### BRIEF DESCRIPTION OF THE DRAWINGS

FIG. 1 is a schematic structural diagram of a grass collection apparatus provided in a first embodiment of the present disclosure.
FIG. 2 is a partial cross-sectional view of a grass collection bracket of the grass collection apparatus in FIG. 1.
FIG. 3 is a side view of the grass collection bracket of the grass collection apparatus in FIG. 1.
FIG. 4 is a front view of the grass collection bracket of the grass collection apparatus in FIG. 1.
FIG. 5 is a schematic diagram of an assembly structure of a bracket body and a handle of the grass collection bracket in FIG. 4.
FIG. 6 is a schematic structural diagram of a grass collection apparatus provided in a second embodiment of the present disclosure.
FIG. 7 is a partial cross-sectional view of the grass collection apparatus in FIG. 1.
FIG. 8 is an enlarged view of a portion I in FIG. 7.
FIG. 9 is a bottom view of a box cover and a carrying handle of a grass collection box of the grass collection apparatus in FIG. 1.
FIG. 10 is an enlarged view of the carrying handle in FIG. 9.
FIG. 11 is a schematic structural diagram of a partial structure of the grass collection apparatus in FIG. 1.
FIG. 12 is a schematic structural diagram of a swing module of the grass collection apparatus in FIG. 1 from a first perspective.
FIG. 13 is a partial cross-sectional view of the grass collection apparatus in FIG. 1 from the first perspective.
FIG. 14 is an enlarged view of a mounting bracket of the swing module in FIG. 12 from the first perspective.
FIG. 15 is an enlarged view of the mounting bracket of the swing module in FIG. 12 from a second perspective.
FIG. 16 is an enlarged view of a first bracket of the mounting bracket of the swing module in FIG. 12 from a third perspective.
FIG. 17 is a schematic structural diagram of the swing module in FIG. 12 from the second perspective.
FIG. 18 is a partial cross-sectional view of the grass collection apparatus in FIG. 1 with a driving component omitted from the second perspective.

Description of main component symbols: grass collection apparatus - 1000; grass collection bracket - 100; bracket body - 110; mounting hole - 1101; accommodating cavity - 102; mounting space - 103; first bracket body - 111a; second bracket body - 112a; mounting protrusion - 120; mounting cavity - 1201; shaft hole - 1202; wiring hole - 1203; curved surface - 1205; positioning structure - 31a; positioning column - 311; positioning hole - 312; limiting protrusion - 32a; limiting groove - 320a; cover plate - 130; top cover - 150; convex rib - 151; flow guiding groove - 152; mounting arm - 170; handle - 60; guiding structure - 61; locking structure - 70; grass collection box - 200; box body - 210; grass collection cavity - 2101; grass collection port - 2102; enclosed space - 2103; first clearance groove - 2105; second clearance groove - 2106; box housing - 211; box cover - 212; first region - 2121; second region - 2122; pressing cover - 213; limiting and restraining structure - 215; first limiting portion - 2151; second limiting portion - 2152; reinforcing rib - 216; first rib - 2161; second rib - 2162; rotating arm - 220; semi-open groove - 2201; carrying handle - 230; gripping portion - 231; first gripping section - 2311; second gripping section - 2312; bent portion - 233; first bent section - 2331; second bent section - 2332; swing module - 300; swing component - 310; swing rod - 10; connecting rod - 11; thinning groove - 1102; positioning protrusion - 111; swing arm - 12; limiting rod - 13; transmission gear - 15; swing wings - 20; specially-shaped surface - 201; bearing surface - 202; reinforcing rib - 21; sensing component - 30; first sensing member - 31; second sensing member - 32; circuit board - 33; driving component - 320; driving member - 41; output gear - 42; output shaft - 43; mounting bracket - 330; clamping groove - 3301; accommodating cavity - 3302; swing cavity - 3303; first bracket - 51; movable hole - 5101; limiting hole - 5102; positioning groove - 5103; first extension portion - 511; second extension portion - 512; fixing column - 513; connection structure - 514; limiting structure - 515; fixing plate - 516; second bracket - 52; mating structure - 521; lug - 522; positioning convex rib - 53; floating mechanism - 400; detector - 500; guiding surface - 501; fixing base - 510; detection module - 520; sealing member - 530; length direction - X; width direction - Y; height direction - Z.

### DETAILED DESCRIPTION

The following describes various embodiments of the present disclosure with reference to the accompanying drawings.

In the description of the embodiments of the present disclosure, it should be noted that, unless otherwise clearly specified and limited, the term "connected" should be understood in a broad sense. For example, "connected" may be detachably connected or non-detachably connected; it may be directly connected or indirectly connected through an intermediate medium. Wherein, "fixedly connected" may mean being connected to each other and the relative positional relationship after connection is unchanged. "Rotatably connected" may mean being connected to each other and being able to rotate relatively after connection. The term "integrally formed" means that in the process of forming one of a plurality of components, the component is connected together with other components, and it is not necessary to connect the two components together by a secondary processing method (such as adhesive bonding, welding, snap-fit connection, or screw connection). The directional terms mentioned in the embodiments of the present disclosure, such as "top", "bottom", "inner", "outer", "side", etc., are only directions referring to the accompanying drawings. Therefore, the directional terms used are for better and clearer description and understanding of the embodiments of the present disclosure, rather than indicating or implying that the apparatus or element referred to must have a specific orientation, be constructed and operated in a specific orientation, and therefore cannot be understood as a limitation on the embodiments of the present disclosure.

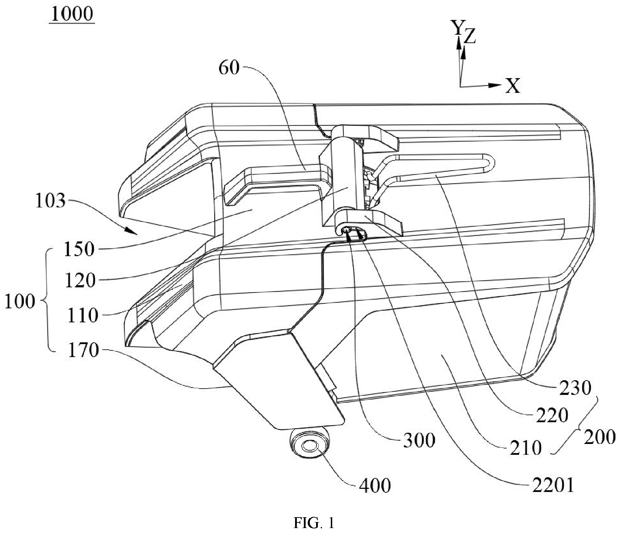

Please refer to FIG. 1, which is a schematic structural diagram of a grass collection apparatus 1000 provided in a first embodiment of the present disclosure. The grass collection apparatus 1000 includes a grass collection bracket 100, a grass collection box 200, and a swing module 300. The swing module 300 is rotatably mounted on the grass collection bracket 100. The grass collection box 200 is rotatably connected to a rear portion of the grass collection bracket 100 through the swing module 300. The swing module 300 is configured to drive the grass collection box 200 to swing relative to the grass collection bracket 100, so as to achieve an automatic grass discharging function of the grass collection apparatus 1000, and improve grass discharging efficiency.

It should be noted that the purpose of FIG. 1 is only to schematically describe a connection manner among the grass collection bracket 100, the swing module 300, and the grass collection box 200, and is not a specific limitation on a connection position, connection relationship, and specific configuration of each element. FIG. 1 is only a structure of the grass collection apparatus 1000 schematically shown in the embodiments of the present disclosure, and does not constitute a specific limitation on the grass collection apparatus 1000. In some other embodiments of the present disclosure, the grass collection apparatus 1000 may include more or fewer components than those shown in FIG. 1, or combine some components, or have different components. For example, the grass collection apparatus 1000 may also include, but is not limited to, a rolling brush mechanism, a connection mechanism, etc. The connection mechanism is configured to connect the grass collection apparatus 1000 to a lawn mower. The rolling brush mechanism may be configured to collect grass clippings cut by the lawn mower.

For accuracy of description, all directions referred to herein shall be based on FIG. 1. The term "length direction X" refers to an arrangement direction of the grass collection bracket 100 and the grass collection box 200, namely a front-rear direction, where a positive X-axis direction is a front direction. The term "width direction Y" refers to an arrangement direction of two rotating arms 220 in the grass collection box 200, which is a left-right direction (wherein a Y-axis positive direction is right). The term "height direction Z" refers to an arrangement direction of a bracket body 110 and a mounting protrusion 120 in the grass collection bracket 100, which is an up-down direction (wherein a Z-axis positive direction is up). Wherein, the length direction X, the width direction Y, and the height direction Z together form three orthogonal directions of the grass collection box 200. For convenience of description, the up-down, left-right, and front-rear orientations in the present disclosure are relative positions and do not constitute an implementation limitation. The length direction X, the width direction Y, and the height direction Z of the grass collection box 200 may be customized according to a specific structure of a product and a presentation perspective of the accompanying drawings, which is not specifically limited in the present disclosure. For clearer description, two ends along the length direction X of the grass collection apparatus 1000 itself are defined as a head portion and a rear portion respectively, that is, the head and the rear portion are disposed opposite to each other; in FIG. 1, when describing an anterior end or a posterior end of a certain object, a left end of the object is the head, and a right end of the object is the rear portion. For example, the rear portion of the grass collection bracket 100 refers to a posterior end portion of the grass collection bracket 100 close to the grass collection box 200. The head of the grass collection bracket 100 refers to an anterior end portion of the grass collection bracket 100 away from the grass collection box 200.

The grass collection apparatus 1000 has a grass collection state and a grass discharging state. In the grass collection state, the grass collection box 200 covers the grass collection bracket 100, and the grass collection box 200 may be configured to temporarily store the grass clippings cut by the lawn mowing device; in the grass discharging state, the grass collection box 200 flips relative to the grass collection bracket 100, so as to dump the grass clippings collected in the grass collection box 200. The swing module 300 is provided at a top of the grass collection bracket 100, and is configured to flip the grass collection box 200 to dump the grass clippings collected in the grass collection box 200, thereby realizing the automatic grass discharging function of the grass collection apparatus 1000 and improving the grass discharging efficiency. In this embodiment, the swing module 300 is mounted on the mounting protrusion 120, and is provided at the rear portion of the grass collection bracket 100. On the one hand, this facilitates alignment and assembly of the swing module 300 and the grass collection box 200, thereby better realizing flipping performance of the swing module 300; on the other hand, this increases a height of a rotation point, improving the grass discharging efficiency.

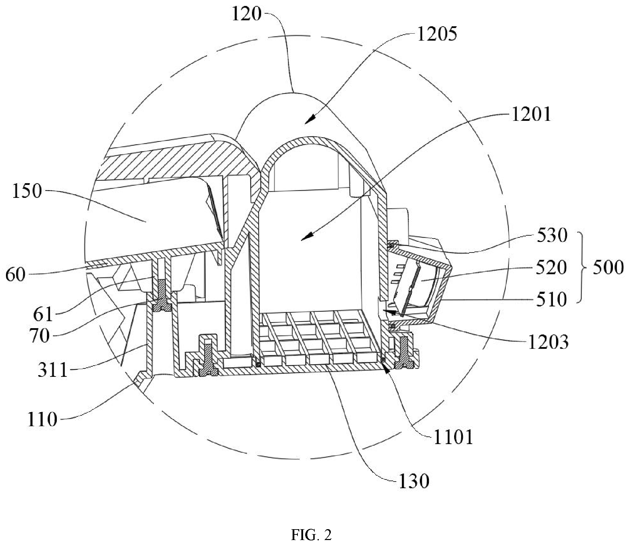

Please refer to FIG. 1 and FIG. 2 together. FIG. 2 is a partial cross-sectional view of the grass collection bracket 100 of the grass collection apparatus 1000 in FIG. 1. The embodiments of the present disclosure provide a grass collection bracket 100. The grass collection bracket 100 is configured to connect the lawn mower and the grass collection box 200. The grass collection bracket 100 includes a bracket body 110 and a mounting protrusion 120. The bracket body 110 is fixed to the lawn mower. The mounting protrusion 120 protrudes from a top portion of the bracket body 110, and is located at a rear portion of the bracket body 110. The swing module 300 is disposed in the mounting protrusion 120 and is configured to drive the grass collection box 200 to swing relative to the grass collection bracket 100.

In the grass collection bracket 100 provided by the embodiments of the present disclosure, on one hand, the mounting protrusion 120 can be configured to adjust an installation height of the swing module 300, thereby avoiding waste of assembly space of the grass collection bracket 100, achieving a reasonable and compact structural distribution, increasing the height of the rotation point, and improving the grass discharging efficiency. On the other hand, arranging the swing module 300 at the top of the grass collection bracket 100 reduces a swing area of the swing module 300 within the grass collection bracket 100, reduces an occupied volume of the swing module 300, and improves space utilization.

In a possible implementation, a mounting cavity 1201 accommodating the swing module 300 is defined in the mounting protrusion 120. A mounting hole 1101 communicating with the mounting cavity 1201 is provided on a side of the bracket body 110 facing away from the mounting protrusion 120. Thus, based on the mounting hole 1101 defined at a bottom of the bracket body 110, waterproof performance of the mounting protrusion 120 is improved, service life of the swing module 300 is prolonged, and assembly of the swing module 300 is facilitated, thereby beautifying an appearance of the grass collection bracket 100.

In a possible implementation, the grass collection bracket 100 further includes a cover plate 130 covering the mounting hole 1101. Thus, on the one hand, grass clippings or other debris are prevented from entering the mounting cavity 1201, thereby reducing cleaning difficulty of the grass collection bracket 100. On the other hand, the cover plate 130 may also provide a support or mounting position for the swing module 300, thereby improving connection reliability and connection strength between the swing module 300 and the grass collection bracket 100. The cover plate 130 is detachably connected to the bracket body 110, which facilitates installation of the cover plate 130 and the bracket body 110, and facilitates maintenance and replacement operations of the swing module 300. The cover plate 130 and the bracket body 110 may be detachably connected by, but not limited to, a mounting structure, a snap-fit, etc. In a possible embodiment, the cover plate 130 and the bracket body 110 may be non-detachably connected together by bonding or welding, so as to improve the connection strength between the cover plate 130 and the bracket body 110, and improve assembly efficiency of the grass collection bracket 100.

In another possible implementation, when the swing module 300 passes through the mounting hole 1101 and is mounted in the mounting cavity 1201, a casing of the swing module 300 can cover the mounting hole 1101, thereby preventing grass clippings or other debris from entering the mounting cavity 1201, and reducing the cleaning difficulty of the grass collection bracket 100.

The grass collection box 200 includes a box body 210 and a rotating arms 220 provided on the box body 210. The rotating arms 220 are provided at two side portions of the box body 210 in the width direction Y of the grass collection bracket 100. On the one hand, when a user applies a force to a carrying handle 230, the two rotating arms 220 on the box body 210 are evenly stressed, avoiding stress concentration, prolonging service life of the grass collection box 200, which is convenient to use and simple to operate; on the other hand, top space of the box body 210 is reasonably utilized, improving space utilization.

In a possible implementation, the grass collection box 200 may further include a carrying handle 230. The carrying handle 230 is provided on the box body 210, and is disposed close to the rotating arms 220. The carrying handle 230 is configured to drive the box body 210 to flip relative to the grass collection bracket 100, thereby reasonably utilizing the top space of the box body 210, improving space utilization, and enabling the grass collection box 200 to have manual grass discharging and automatic grass discharging functions, enriching application scenarios of the grass collection box 200, and enhancing user experience.

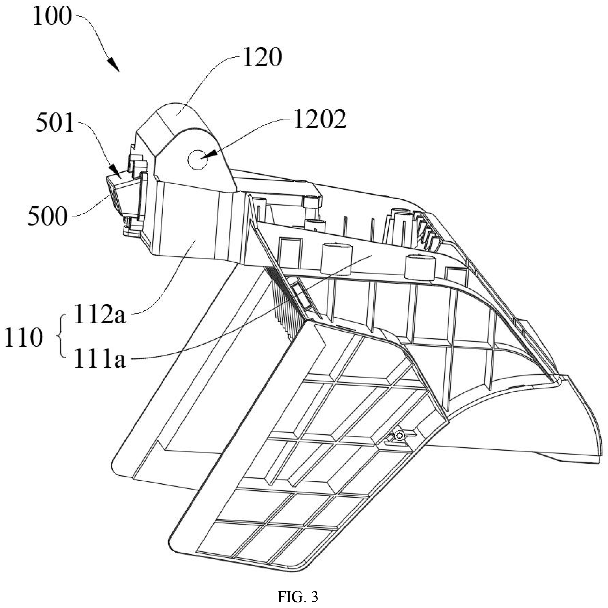

Please refer to FIG. 2 and FIG. 3 together. FIG. 3 is a side view of the grass collection bracket 100 of the grass collection apparatus 1000 in FIG. 1. Along the width direction Y of the grass collection bracket 100, a shaft hole 1202 communicating with the mounting cavity 1201 is provided at an end of the mounting protrusion 120 facing away from the bracket body 110, and two ends of the swing module 300 extend through the shaft hole 1202 and protrude from the shaft hole 1202. Thus, on the one hand, it facilitates assembly of the swing module 300 and the grass collection box 200; on the other hand, it ensures integrity of the mounting protrusion 120, enhances overall structural strength of the mounting protrusion 120, and improves connection reliability between the swing module 300 and the mounting protrusion 120.

Exemplarily, in this embodiment, the shaft hole 1202 is provided on a side of the mounting protrusion 120 facing away from the bracket body 110, thereby further increasing the installation height of the swing module 300, improving space utilization of the mounting cavity 1201 of the mounting protrusion 120, making structural distribution reasonable and compact, and increasing the height of the rotation point to improve grass discharging efficiency; and provides a sufficiently large moving space for rotation of the swing module 300 and the grass collection box 200. In another possible implementation, the shaft hole 1202 is provided at a middle portion or other positions of the mounting protrusion 120, which is not specifically limited in the present disclosure.

In the height direction Z of the grass collection bracket 100, a highest point of the mounting protrusion 120 is higher than a highest point of the bracket body 110, thereby providing a larger assembly space for the swing module 300, while ensuring the height of the rotation point, improving the grass discharging efficiency and space utilization. Exemplarily, in this embodiment, the mounting protrusion 120 protrudes relative to the bracket body 110 in the height direction Z of the grass collection bracket 100. The mounting protrusion 120 and the bracket body 110 are integrally formed, thereby improving overall structural strength of the grass collection bracket 100. In a possible implementation, the mounting protrusion 120 and the bracket body 110 may also be fixedly connected together by a mounting structure.

The bracket body 110 includes a first bracket body 111a and a second bracket body 112a connected to the first bracket body 111a. The second bracket body 112a protrudes beyond a rear portion of the first bracket body 111a in a length direction X of the grass collection bracket 100, and is suspended relative to a bottom of the first bracket body 111a in the height direction Z of the grass collection bracket 100. The mounting protrusion 120 is provided on the second bracket body 112a, thereby facilitating installation of the swing module 300 into the mounting cavity 1201 of the mounting protrusion 120 from a bottom of the second bracket body 112a, and improving assembly efficiency of the swing module 300 and the grass collection bracket 100. Along the width direction Y of the grass collection bracket 100, a width of the first bracket body 111a is greater than a width of the second bracket body 112a, thereby facilitating positioning and assembly of the grass collection bracket 100 and the grass collection box 200.

Exemplarily, in this embodiment, a top surface of the mounting protrusion 120 facing away from the bracket body 110 is configured as a curved surface 1205. Thus, on one hand, rainwater can quickly discharge from the grass collection bracket 100 along the curved surface 1205 of the mounting protrusion 120; on the other hand, aesthetics of the grass collection bracket 100 are improved, and collision risks and installation difficulty caused by an irregular outer wall of the mounting protrusion 120 are avoided. In a possible implementation, the top surface of the mounting protrusion 120 facing away from the bracket body 110 may also be configured as a flat surface.

In a possible implementation, a detector 500 is provided on a side wall of the mounting protrusion 120 facing the grass collection box 200. The detector 500 is configured to detect a grass collection state in the grass collection box 200, so as to facilitate the user to determine whether to perform a grass discharging operation and determine swing parameters of the swing module 300 based on the grass collection state, thereby avoiding damage to the grass collection box 200 caused by an excessive amount of grass collected in the grass collection box 200, and improving the grass discharging efficiency.

The detector 500 includes, but is not limited to, at least one of an ultrasonic sensor, an infrared sensor, a laser sensor, a radar sensor, and a vision sensor. Exemplarily, in this embodiment, the detector 500 is configured as an ultrasonic sensor, thereby improving detection sensitivity and detection accuracy.

In a possible implementation, the detector 500 includes a guiding surface 501 facing a top of the grass collection box 200. The guiding surface 501 is inclined in a direction away from the mounting protrusion 120 away from the length direction X of the grass collection bracket 100. Exemplarily, in this embodiment, the detector 500 includes a fixing base 510 and a detection module 520 provided in the fixing base 510. The fixing base 510 includes the guiding surface 501 facing the top of the grass collection box 200. The guiding surface 501 extends downward and obliquely relative to the mounting protrusion 120. Thus, on the one hand, interference with the grass collection box 200 when the grass collection box 200 pivots relative to the grass collection bracket 100 of the grass collection apparatus 1000 is avoided; on the other hand, a sensing range of the detector 500 in the grass collection box 200 is improved, and detection accuracy and detection reliability are improved; moreover, accumulated water on the detector 500 can be discharged promptly, improving waterproof performance of the detector 500.

Exemplarily, in this embodiment, the detection module 520 is detachably mounted on the grass collection bracket 100 through the fixing base 510, thereby facilitating maintenance, replacement, and cleaning operations of the detector 500. In a possible implementation, the fixing base 510 and the grass collection bracket 100 are integrally formed. The detection module 520 is detachably mounted in the fixing base 510.

A side wall of the mounting protrusion 120 is defined in a wiring hole 1203 communicating with an inner cavity of the fixing base 510, thereby achieving connection between the detection module 520 and the swing module 300, shortening connection wiring, and rendering the structure compact. The fixing base 510 is sealingly connected to the mounting protrusion 120, thereby avoiding damage to the detection module 520. In a possible implementation, the fixing base 510 and the mounting protrusion 120 are sealingly connected by a sealing member 530. The detection module 520 may include, but is not limited to, a camera and a circuit board. The circuit board is capable of processing image data acquired by the camera.

In a possible implementation, the grass collection bracket 100 further includes a handle 60. One end of the handle 60 is fixed to the mounting protrusion 120, and the other end of the handle 60 is fixed to the bracket body 110. Thus, on the one hand, it facilitates a user to quickly move and carry the grass collection bracket 100; on the other hand, based on fixing one end of the handle 60 to the mounting protrusion 120, the structure is compact, and a height of the carrying handle 230 is raised, so that a center of gravity of the grass collection bracket 100 is located below the carrying handle 230, which enhances safety and is effortless and comfortable.

In a possible implementation, two ends of the handle 60 may also be fixed to the bracket body 110. A connection setting manner of the handle 60 may be designed according to factors such as the center of gravity of the grass collection bracket 100, which is not specifically limited in the present disclosure.

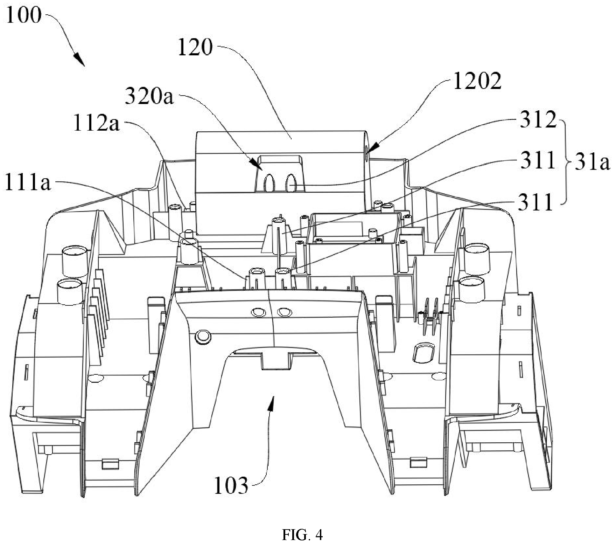

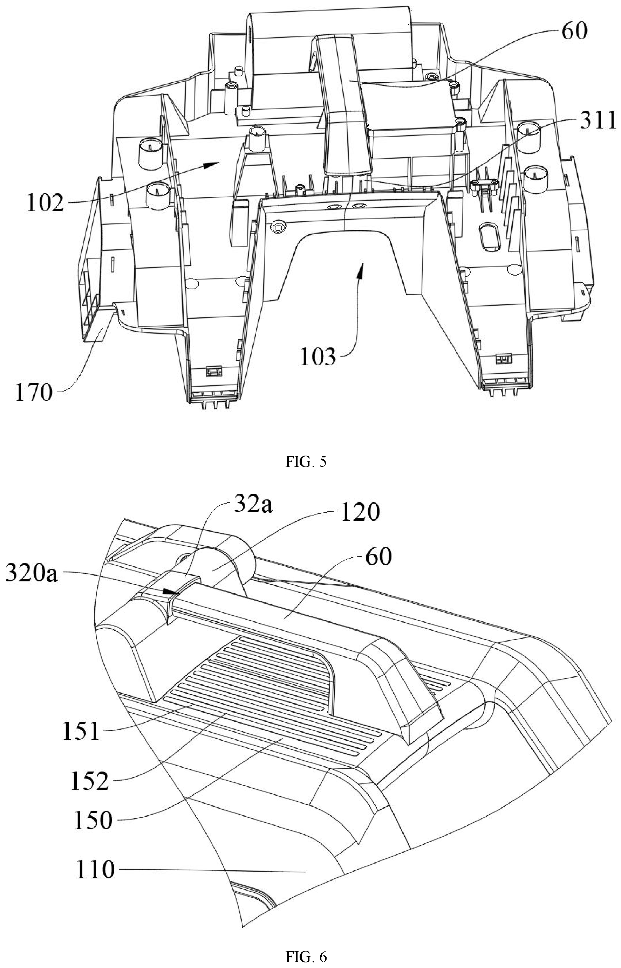

Please refer to FIG. 2, FIG. 4, and FIG. 5 together. FIG. 4 is a front view of the grass collection bracket 100 of the grass collection apparatus 1000 in FIG. 1; FIG. 5 is a schematic diagram of an assembly structure of the bracket body 110 and the handle 60 of the grass collection bracket 100 in FIG. 4. In a possible implementation, a positioning structure 31a is provided on the bracket body 110 and/or the mounting protrusion 120, and a guiding structure 61 mating with the positioning structure 31a is provided on the handle 60. Thus, on the one hand, assembly positioning of the handle 60 is achieved, and assembly efficiency is improved; on the other hand, it is convenient to position the handle 60 to a middle portion of the grass collection bracket 100, so as to realize that a center of gravity line of the grass collection bracket 100 passes through the handle 60, which has advantages of simple structure, reasonable layout, and convenient pick-and-place. Exemplarily, in this embodiment, the positioning structure 31a is provided on both the bracket body 110 and the mounting protrusion 120. In a possible implementation, a guiding structure 61 is provided at each of two end portions of the handle 60. One guiding structure 61 matches the positioning structure 31a provided on the bracket body 110, and the other guiding structure 61 matches the positioning structure 31a provided on the mounting protrusion 120, thereby facilitating installation positioning of the handle 60.

The positioning structure 31a includes a positioning column 311 and/or a positioning hole 312. The guiding structure 61 is configured as a connecting rod inserted into the positioning column 311 and/or the positioning hole 312. The positioning column 311 is locked to the connecting rod by a locking structure 70. Exemplarily, in this embodiment, the bracket body 110 is provided with the positioning column 311. In this way, the positioning column 311 can support the handle 60 and raise a height of the handle 60, so that the center of gravity of the grass collection bracket 100 is located below the carrying handle 230, which enhances safety and is effortless and comfortable. The positioning column 311 is provided with a through hole along an axial direction. A limiting step is provided in the through hole, and the connecting rod is stopped by the limiting step. The locking structure 70 passes through the through hole and is locked to the connecting rod, and the locking structure 70 is stopped by the limiting step, thereby realizing fixed connection between the handle 60 and the bracket body 110.

The mounting protrusion 120 is provided with the positioning hole 312. A limiting step is also provided in the positioning hole 312, and the connecting rod is stopped by the limiting step. The locking structure 70 passes through the positioning hole 312 and is locked to the connecting rod, and the locking structure 70 is stopped by the limiting step, thereby realizing fixed connection between the handle 60 and the bracket body 110. In the embodiments of the present disclosure, raising the handle 60 by the mounting protrusion 120 simplifies a structure of the positioning column 311 supporting the handle 60, resulting in a reasonable layout and a compact structure. A quantity of the positioning structures 31a and a quantity of the guiding structures 61 may both include one or a plurality. Exemplarily, in this embodiment, the quantity of the positioning structures 31a corresponds one-to-one to the quantity of the guiding structures 61, and a plurality of them are included, thereby improving a positioning and assembly effect.

In some possible implementations, a limiting groove 320a is defined in the mounting protrusion 120. One end of the handle 60 is inserted into the limiting groove 320a, and the positioning structure 31a is provided in the limiting groove 320a. The limiting groove 320a can achieve pre-assembly between the handle 60 and the mounting protrusion 120, thereby facilitating operation and improveing assembly efficiency of the handle 60 and the mounting protrusion 120.

Please refer to FIG. 1 and FIG. 5 again. In some possible implementations, the grass collection bracket 100 further includes a top cover 150. The top cover 150 is disposed over a top portion of the bracket body 110, and the mounting protrusion 120 and the handle 60 pass through and protrude from the top cover 150, thereby improving aesthetics of the grass collection bracket 100, and improving waterproof performance of the grass collection bracket 100. An accommodating space 102 is formed between the top cover 150 and the bracket body 110. The positioning structure 31a is provided in the accommodating space 102. Other structural elements may also be provided in the accommodating space 102, which is not specifically limited in the present disclosure. The top cover 150 and the bracket body 110 may be detachably connected by, but not limited to, a mounting structure, a snap-fit, etc., thereby facilitating assembly of the grass collection bracket 100. In a possible embodiment, the top cover 150 and the bracket body 110 may be non-detachably connected together by bonding or welding, so as to improve connection strength between the top cover 150 and the bracket body 110, and improve assembly efficiency of the grass collection bracket 100.

In some possible implementations, the grass collection bracket 100 further includes two mounting arms 170. The two mounting arms 170 are provided on two sides of the bracket body 110 in the width direction Y of the grass collection bracket 100, and are configured for mounting a floating mechanism 400. Thus, on one hand, the center of gravity of the grass collection apparatus 1000 is balanced to avoid a risk of warping. In some embodiments, the mounting arms 170 may also be configured to mount other structures, such as, but not limited to, a rolling brush mechanism, which is not specifically limited in the present disclosure.

In some possible implementations, a side of the bracket body 110 facing away from the mounting protrusion 120 is provided with a mounting space 103, and the mounting space 103 is configured for mounting a lawn mower. In this way, when the grass collection apparatus 1000 is applied to the lawn mower, a length of the lawn mower in the length direction X is shortened, making an overall structure of the lawn mowing device more compact and improving space utilization.

Please refer to FIG. 6, which is a schematic structural diagram of a grass collection apparatus 1000 provided in a second embodiment of the present disclosure. In the second embodiment, a structure of the grass collection apparatus 1000 is similar to a structure of the grass collection apparatus 1000 of the first embodiment. A difference lies in that a structure and an installation manner of a handle 60 of the second embodiment are different from a structure and an installation manner of the handle 60 of the first embodiment, and a structure of a top cover 150 of the second embodiment is different from a structure of the top cover 150 of the first embodiment. For other structures of the grass collection apparatus 1000 of the second embodiment, reference may be made to the first embodiment, and details are not described herein again.

In the second embodiment, a limiting protrusion 32a is provided on a side of the mounting protrusion 120 facing the handle 60. The limiting protrusion 32a is provided with a limiting groove 320a, and one end of the handle 60 is inserted into the limiting groove 320a and is limited by the limiting protrusion 32a in a height direction Z of the grass collection bracket 100. Thus, the design of the limiting protrusion 32a, on the one hand, enhances connection strength and connection reliability between the carrying handle 230 and the mounting protrusion 120; on the other hand, improves assembly efficiency of the handle 60 and the bracket body 110.

A plurality of spaced convex ribs 151 are provided on the top cover 150. A flow guiding groove 152 is formed between two adjacent convex ribs 151. Thus, rainwater can be quickly discharged from the grass collection bracket 100 along an extending direction of the flow guiding groove 152, avoiding water accumulation on the grass collection bracket 100; on the other hand, the convex ribs 151 can also enhance structural strength of the top cover 150.

Please refer to FIG. 1 again. The embodiments of the present disclosure provide a grass collection box 200, comprising a box body 210 and a carrying handle 230. A rotating arms 220 protrudes from a top of the box body 210, and the rotating arms 220 is configured to be rotatably connected to a swing module 300 of the grass collection apparatus 1000. Driven by the swing module 300, the rotating arms 220 flips together with the box body 210 relative to the grass collection bracket 100 of the grass collection apparatus 1000. The carrying handle 230 is provided on the box body 210, and is disposed close to the rotating arms 220. The carrying handle 230 is configured to drive the box body 210 to flip relative to the grass collection bracket 100.

In the grass collection box 200 provided by the embodiments of the present disclosure, on the one hand, based on the rotating arms 220 protruding from the top of the box body 210, a height of a rotation point is increased, improving grass discharging efficiency; on the other hand, based on the carrying handle 230 and the rotating arms 220 rotatably connected to the swing module 300 of the grass collection apparatus 1000 provided on the grass collection box 200, the carrying handle 230 is disposed close to the rotating arms 220, thereby reasonably utilizing top space of the box body 210, improving space utilization, and the grass collection box 200 is enabled to have both manual and automatic grass discharging functions, application scenarios of the grass collection box 200 are enriched, and user experience is enhanced.

In a possible implementation, in a height direction Z of the grass collection box 200, a side of the rotating arms 220 facing the box body 210 is provided with a specially-shaped semi-open groove 2201 mating with the swing module 300, thereby facilitating a detachable connection between the grass collection box 200 and the swing module 300. An opening of the specially-shaped semi-open groove 2201 faces the box body 210. It may be understood that when the user needs to lift the grass collection box 200 upward, the user can hold the carrying handle 230 to drive the grass collection box 200 to flip a certain angle relative to the grass collection bracket 100, and then push forward toward the swing module 300, so that the specially-shaped semi-open groove 2201 of the rotating arms 220 are disengaged from a snap connection with the swing module 300, and thus the grass collection box 200 can be quickly disassembled from the grass collection bracket 100, and the grass collection box 200 can be lifted upward. The specially-shaped semi-open groove 2201 is configured as a specially-shaped groove, so that swing of the swing module 300 can drive the rotating arms 220 and the box body 210 to swing synchronously, thereby achieving that the grass collection box 200 as a whole flips relative to the grass collection bracket 100.

Exemplarily, in this embodiment, the rotating arms 220 are provided at two side portions of the box body 210 in a width direction Y of the grass collection box 200, and the carrying handle 230 is located between the two rotating arms 220. On the one hand, when the user applies a force to the carrying handle 230, the two rotating arms 220 on the box body 210 are evenly stressed, avoiding stress concentration, prolonging service life of the grass collection box 200 is convenient to use and simple to operate. On the other hand, the top space of the box body 210 is reasonably utilized, improving space utilization. In a possible implementation, a quantity of the rotating arms 220 may also include one, three, or more than three, which is not specifically limited in the present disclosure. The carrying handle 230 is provided at a middle portion of the box body 210, thereby avoiding a phenomenon of deformation or damage of the carrying handle 230 when being stressed due to a center of gravity of the grass collection box 200 not being collinear with an applied force direction of the carrying handle 230, and further realizing that a design of a structure of the carrying handle 230 is more reasonable, beautiful, and practical. In a possible implementation, the carrying handle 230 is aligned with the two rotating arms 220 in the width direction Y of the grass collection box 200. It should be noted that a disposition manner of the carrying handle 230 may be designed according to factors such as a structure and a connection position of the rotating arms 220, which is not specifically limited in the present disclosure.

The rotating arms 220 are configured as a hook structure. The swing module 300 is provided with a hanging rod structure rotatably connected to the hook structure, thereby enabling the grass collection box 200 to flip relative to the grass collection bracket 100, and further realizing a grass discharging function of the grass collection box 200. In a possible implementation, the grass collection box 200 is detachably connected to the grass collection bracket 100, thereby facilitating operations such as cleaning and maintenance of the grass collection box 200, enriching application scenarios of the grass collection box 200, and improving use flexibility.

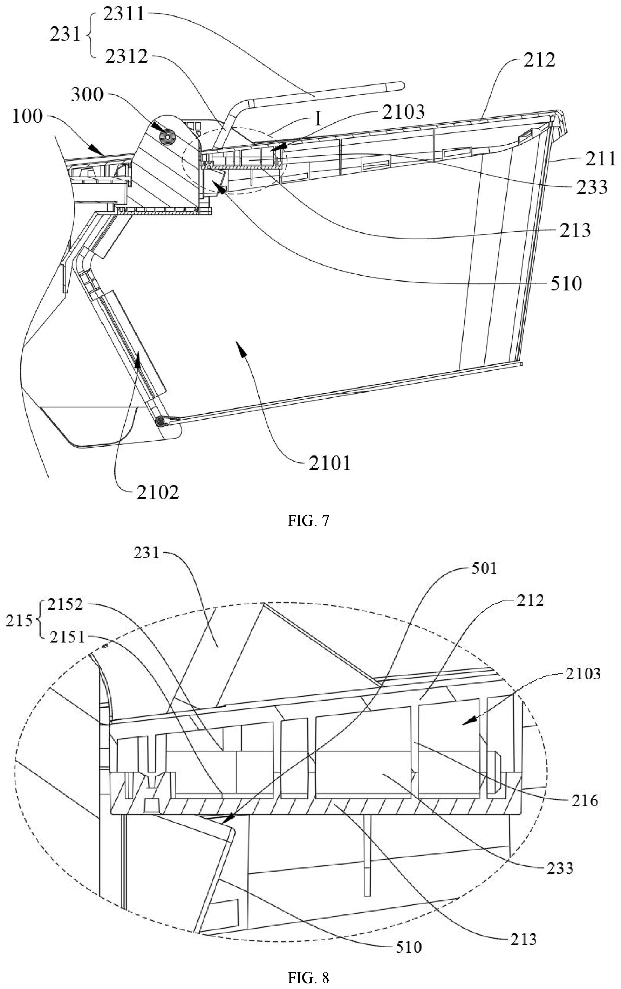

Please refer to FIG. 1 and FIG. 7 together. FIG. 7 is a partial cross-sectional view of the grass collection apparatus 1000 in FIG. 1. A grass collection mechanism is further provided on the box body 210. The grass collection mechanism is, for example, but not limited to, a driver and a rolling brush drivingly connected to the driver. The rolling brush is configured to collect grass clippings into the grass collection box 200. A grass collection cavity 2101 is provided in the box body 210. A side of the box body 210 facing the grass collection bracket 100 is provided with a grass collection port 2102 communicating with the grass collection cavity 2101, so as to achieve collection of grass materials. Exemplarily, in this embodiment, the box body 210 includes a box housing 211, a box cover 212, and a pressing cover 213. The box cover 212 is fixedly connected to the box housing 211 to form the grass collection cavity 2101. The pressing cover 213 is provided in the grass collection cavity 2101 and forms an enclosed space 2103 with the box cover 212. The carrying handle 230 includes a gripping portion 231 and a bent portion 233. The gripping portion 231 is located outside the grass collection cavity 2101. The bent portion 233 is bent relative to the gripping portion 231, and is provided in the enclosed space 2103. Thus, on the one hand, based on providing the carrying handle 230 on the box cover 212, it is convenient for a user to hold and operate the grass collection box 200, making its use flexible and convenient; on the other hand, the bent portion 233 of the carrying handle 230 is provided in the enclosed space 2103 formed by the pressing cover 213 and the box cover 212, thereby preventing grass clippings from remaining at a connection position between the bent portion 233 and an inner wall of the grass collection cavity 2101, and reducing cleaning difficulty of the grass collection box 200.

Exemplarily, in this embodiment, the box housing 211 and the box cover 212 are detachably connected together, thereby facilitating installation, maintenance, and cleaning operations of the carrying handle 230 and the pressing cover 213. The box housing 211 and the box cover 212 may be detachably connected by, but not limited to, a mounting structure, a snap-fit, etc. In a possible embodiment, the box housing 211 and the box cover 212 are non-detachably connected together, so as to improve connection strength between the box housing 211 and the box cover 212, and improve assembly efficiency of the grass collection box 200.

Please refer to FIG. 7 and FIG. 8 together. FIG. 8 is an enlarged view of a portion I in FIG. 7. The bent portion 233 is sandwiched between the pressing cover 213 and the box cover 212, thereby simplifying fixed connection between the carrying handle 230 and the box body 210, avoiding rotation of the carrying handle 230, and improving use experience. The pressing cover 213 and the box cover 212 are fixedly connected together by a locking member, thereby so that the bent portion 233 of the carrying handle 230 is sandwiched between the pressing cover 213 and the box cover 212, and facilitating installation of the pressing cover 213. In a possible implementation, the bent portion 233 of the carrying handle 230 may be fixed between the pressing cover 213 and/or the box cover 212 by a locking structure to improve connection strength between the carrying handle 230 and the box body 210.

In a possible implementation, the pressing cover 213 and/or the box cover 212 is provided with a limiting and restraining structure 215. The bent portion 233 is limited and restrained in the enclosed space 2103 by the limiting and restraining structure 215, thereby facilitating assembly positioning of the carrying handle 230 and improving assembly efficiency. Exemplarily, in this embodiment, the limiting and restraining structure 215 is configured as a limiting hole mating with an outer shape of the bent portion 233. For example, a first limiting portion 2151 is provided on the pressing cover 213, and a second limiting portion 2152 is provided on the box cover 212. The first limiting portion 2151 corresponds to the second limiting portion 2152 to form a limiting hole mating with an outer shape of the bent portion 233, thereby limiting the bent portion 233. The limiting hole is circular. In a possible implementation, the limiting hole may also be a regular or irregular hole such as an elliptical hole, a square hole, a polygonal hole, etc. A quantity of the limiting and restraining structures 215 may include one or a plurality, which is not specifically limited in the present disclosure.

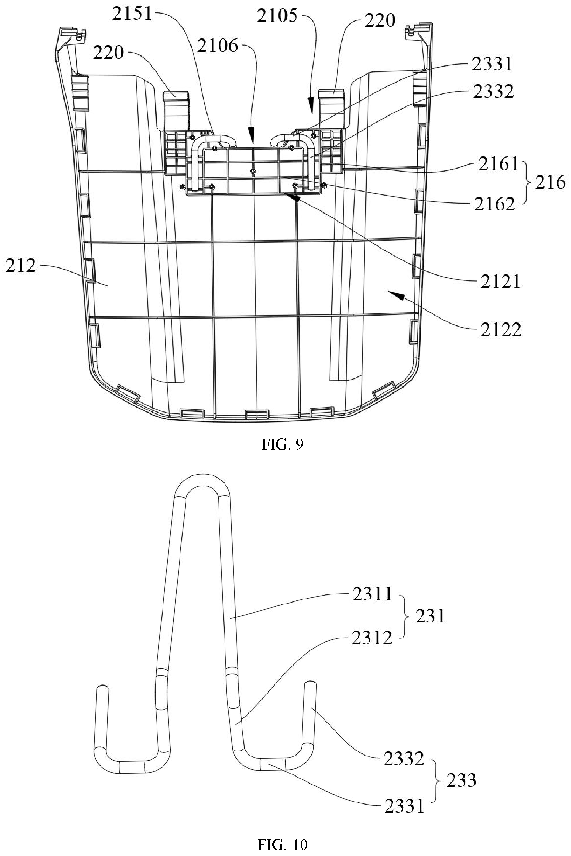

Please refer to FIG. 8 and FIG. 9 together. FIG. 9 is a bottom view of the box cover 212 and the carrying handle 230 of the grass collection box 200 of the grass collection apparatus 1000 in FIG. 1. In a possible implementation, the pressing cover 213 and/or the box cover 212 is provided with a reinforcing rib 216, thereby improving overall structural strength of the pressing cover 213 and/or the box cover 212, and prolonging service life of the grass collection box 200. In this embodiment, both the pressing cover 213 and the box cover 212 are provided with a reinforcing rib 216. Exemplarily, in this embodiment, both the pressing cover 213 and the box housing 211 are provided with a reinforcing rib 216.

In a possible implementation, the box cover 212 is provided with a reinforcing rib 216 corresponding to a region of the pressing cover 213 and/or corresponding to a region of the rotating arms 220. Thus, on the one hand, structural strength at a connection position between the rotating arms 220 and the box body 210 is increased, preventing a phenomenon of deformation or fracture of the rotating arms 220; on the other hand, structural strength of a corresponding region between the box cover 212 and the pressing cover 213 is increased, preventing a phenomenon of deformation or fracture of the box cover 212 when the user applies a force to the carrying handle 230.

In a possible implementation, the box cover 212 includes a first region 2121 corresponding to the pressing cover 213 and a second region 2122 connected to an edge of the first region 2121. The reinforcing rib 216 is provided in the first region 2121. A width of the first region 2121 along the width direction Y of the grass collection box 200 is greater than a distance between the two rotating arms 220. Since no reinforcing rib 216 is provided in the second region 2122, a probability of grass clippings adhering to the second region 2122 of the grass collection box 200 is reduced. A length of the pressing cover 213 in the length direction X of the grass collection box 200 is less than a length of the box cover 212 in the length direction X of the grass collection box 200, thereby reducing production costs. The distance between the two rotating arms 220 refers to a gap distance formed between the two rotating arms 220 in the width direction Y of the grass collection box 200.

In a possible implementation, the reinforcing rib 216 includes a first rib 2161 and a second rib 2162. The first rib 2161 is provided at two sides of the first region 2121 along the width direction Y of the grass collection box 200, and the second rib 2162 is provided at a middle portion of the first region 2121 along the width direction Y of the grass collection box 200. Wherein, a distribution density of the first rib 2161 is greater than a distribution density of the second rib 2162, thereby ensuring structural strength at the connection between the rotating arms 220 and the box body 210 while reducing production costs.

In a possible implementation, a height of the reinforcing rib 216 provided on the box cover 212 in the height direction Z of the grass collection box 200 gradually decreases in a direction from the grass collection box 200 toward the grass collection bracket 100, thereby reducing stress concentration at an end of the bent portion 233 facing away from the gripping portion 231, reducing probability that the carrying handle 230 damages the box body 210, and prolonging service life of the grass collection box 200.

In a possible implementation, the limiting and restraining structure 215 is provided on the reinforcing rib 216, making an overall structure more compact, and dispersing an acting force applied by the carrying handle 230 to the pressing cover 213 or the box cover 212, prolonging service life of the grass collection box 200. In a possible implementation, the limiting and restraining structure 215 may also be provided independently relative to the reinforcing rib 216. Exemplarily, a limiting hole mating with the bent portion 233 is provided on the reinforcing rib 216 to form the limiting and restraining structure 215. The limiting hole may be a closed-loop hole; or may be an open-loop hole.

Please refer to FIG. 7 and FIG. 9 again. A side of the box body 210 facing the grass collection bracket 1000 is provided with a first clearance groove 2105. The rotating arms 220 extends from the box body 210 toward the swing module 300, and an orthographic projection portion of the rotating arms 220 on the box cover 212 is located in the first clearance groove 2105. Thus, on the one hand, a moving space for rotation of the rotating arms 220 are provided while increasing a height of a rotation point, improving grass discharging efficiency; on the other hand, the arrangement makes the overall structure more compact, reasonably utilizes top space of the box body 210, and improves space utilization.

In a possible implementation, a second clearance groove 2106 is recessed in a groove bottom wall of the first clearance groove 2105 of the box body 210. The bent portion 233 passes through a groove side wall of the second clearance groove 2106 and extends into the enclosed space 2103. On the one hand, a phenomenon of interference with the carrying handle 230 can be avoided when the grass collection box 200 flips relative to the grass collection bracket 100; on the other hand, space is provided for assembly of the carrying handle 230, improving assembly efficiency, reasonably utilizing the top space of the box body 210, and improving space utilization.

Exemplarily, in this embodiment, the second clearance groove 2106 has a trapezoidal shape. On the one hand, this enables the second clearance groove 2106 to better adapt to a corner of the bent portion 233, improving an assembly effect; on the other hand, interference with other components is avoided when the carrying handle 230 drives the box body 210 to rotate.

Please refer to FIG. 7 and FIG. 10 together. FIG. 10 is an enlarged view of the carrying handle 230 in FIG. 9. The carrying handle 230 is rod-shaped. Exemplarily, in this embodiment, a radial cross section of the carrying handle 230 is circular. The carrying handle 230 may be formed by bending a rod-shaped structure. In a possible implementation, the carrying handle 230 may also be formed by braiding rod-shaped structures; or it may also be formed by bending a plate-shaped or tube-shaped structure, which is not specifically limited in the present disclosure.

In a possible implementation, the bent portion 233 includes a first bent section 2331 and a second bent section 2332. The first bent section 2331 is connected between the gripping portion 231 and the second bent section 2332. The first bent section 2331 is located on one side of the gripping portion 231 in the width direction Y of the grass collection box 200, and the second bent section 2332 and the gripping portion 231 are located on the same side of the first bent section 2331 in the length direction X of the grass collection box 200. Thus, on the one hand, by arranging the bent portion 233 in a bent path in the enclosed space 2103, connection strength between the carrying handle 230 and the box body 210 is improved; on the other hand, by designing the first bent section 2331 and the second bent section 2332 to extend in different directions, an applied force of the carrying handle 230 can be dispersed to different positions of the grass collection bracket 100, avoiding stress concentration and prolonging service life of the grass collection box 200. In some embodiments, an extending path of the bent portion 233 in the enclosed space 2103 may present, but is not limited to, an L shape, an S shape, a Z shape, or a U shape. In a possible implementation, the bent portion 233 may further include a third bent section connecting the first bent section 2331 and the second bent section 2332, so as to improve structural strength of the bent portion 233, and improve connection strength between the bent portion 233 and the grass collection bracket 100.

In a possible implementation, the gripping portion 231 includes a first gripping section 2311 and a second gripping section 2312 connected between the first gripping section 2311 and the bent portion 233. The first gripping section 2311 is spaced apart from the box body 210, and the second gripping section 2312 is inclined relative to a top wall of the box body 210, thereby facilitating operation of the carrying handle 230 by a user, and providing a clearance space for flipping the grass collection box 200.

Please refer to FIG. 7 and FIG. 8 again. In a possible implementation, the grass collection apparatus 1000 further includes a detector 500. The detector 500 is provided at a top portion of a side of the grass collection bracket 100 facing the grass collection box 200, and is located on a side of the pressing cover 213 facing away from the rotating arms 220. The detector 500 is configured to detect a grass collection state in the grass collection box 200, so as to facilitate the user to determine whether to perform a grass discharging operation based on the grass collection state, thereby avoiding damage to the grass collection box 200 caused by an excessive amount of grass collected in the grass collection box 200.

The detector 500 includes, but is not limited to, at least one of an ultrasonic sensor, an infrared sensor, a laser sensor, a radar sensor, and a vision sensor. Exemplarily, in this embodiment, the detector 500 is configured as an ultrasonic sensor, thereby improving detection sensitivity and detection accuracy.

Please refer to FIG. 2 and FIG. 7 to FIG. 8 together. In a possible implementation, the detector 500 includes a fixing base 510 and a detection module 520. The detection module 520 is provided in the fixing base 510. The fixing base 510 includes a guiding surface 501 facing the pressing cover 213, and the guiding surface 501 is inclined in a direction away from the pressing cover 213. Thus, on one hand, interference with the pressing cover 213 when the grass collection box 200 pivots relative to the grass collection bracket 100 of the grass collection apparatus 1000 is avoided; on the other hand, a sensing range of the detector 500 in the grass collection box 200 is improved, and detection accuracy and detection reliability are improved.

Exemplarily, in this embodiment, the detection module 520 is detachably mounted on the grass collection bracket 100 through the fixing base 510, thereby facilitating maintenance, replacement, and cleaning of the detector 500. In a possible implementation, the fixing base 510 and the grass collection bracket 100 are integrally formed. The detection module 520 is detachably mounted in the fixing base 510.

The embodiments of the present disclosure further provide a lawn mowing device, comprising a lawn mower and the above grass collection box 200 or the above grass collection apparatus 1000. The grass collection box 200 or the grass collection apparatus 1000 is connected to a rear portion of the lawn mower. The lawn mowing device may include, but is not limited to, a walk-behind type, a riding type, and a fully automatic intelligent lawn mowing device, which is not limited in the present disclosure. The lawn mowing device can move on the ground. For example, the lawn mowing device can move on the ground under pushing of a user. For another example, the lawn mowing device itself has an moving capability, and can automatically move on the ground through a driving mechanism.

The lawn mower includes, but is not limited to, a frame, a cutting mechanism, and an elevating mechanism. The grass collection apparatus 1000 or the grass collection box 200 is provided at a rear portion of the frame. Exemplarily, the grass collection bracket 100 is detachably provided on the frame of the lawn mowing device, so that the grass collection apparatus 1000 can be detached from the frame of the lawn mowing device, thereby facilitating maintenance and replacement, and enriching application scenarios of the lawn mowing device, such as a mowing scenario, a grass collection scenario, or a mowing and grass collecting scenario. In some embodiments, the grass collection bracket 100 may also be non-detachably provided on the frame of the lawn mowing device, which is not specifically limited in the present disclosure. The cutting mechanism and the elevating mechanism are provided on the frame. The elevating mechanism is configured to drive the cutting mechanism to move along a height direction Z of the lawn mowing device. The cutting mechanism is configured to cut grass materials.

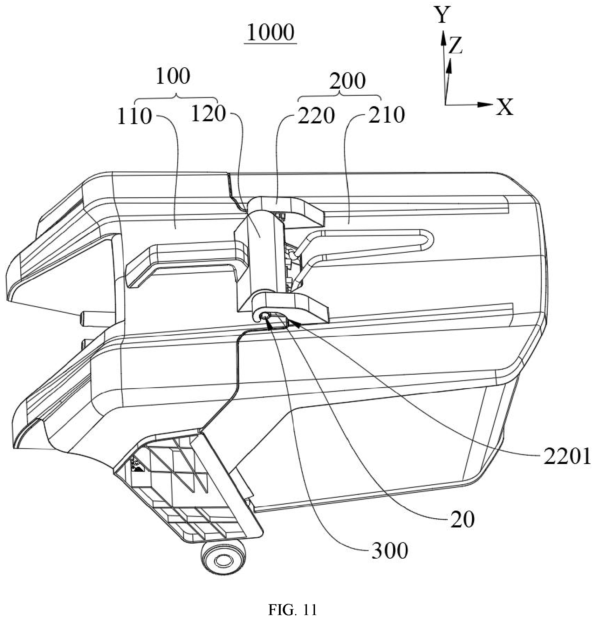

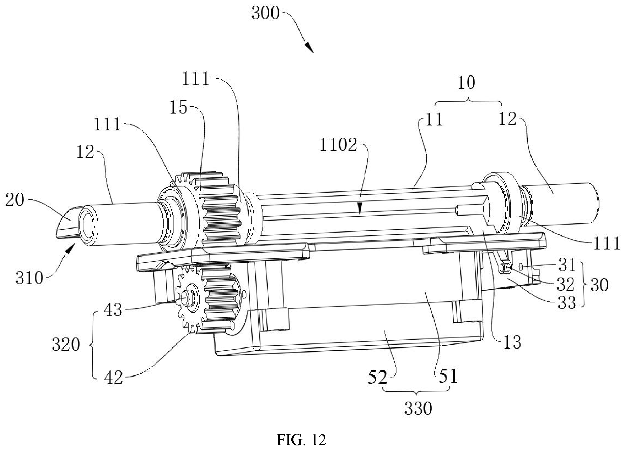

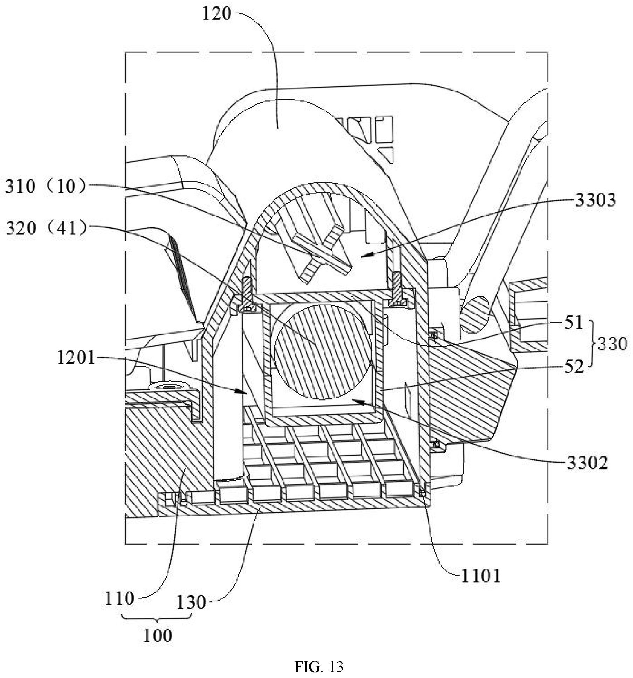

Please refer to FIG. 11, FIG. 12, and FIG. 13 together. FIG. 11 is a schematic structural diagram of a partial structure of the grass collection apparatus 1000 in FIG. 1; FIG. 12 is a schematic structural diagram of a swing module 300 of the grass collection apparatus 1000 in FIG. 11 from a first perspective; FIG. 13 is a partial cross-sectional view of the grass collection apparatus 1000 in FIG. 11 from the first perspective. The swing module 300 is configured to be mounted at a top of the grass collection bracket 100. The swing module 300 includes a swing component 310, a driving component 320, and a mounting bracket 330. An accommodating cavity 3302 is defined in the mounting bracket 330, and the mounting bracket 330 is fixed to the grass collection bracket 100. The swing component 310 is provided on the mounting bracket 330, and is located outside the accommodating cavity 3302. The driving component 320 is provided in the accommodating cavity 3302, and is drivingly connected to the swing component 310. The driving component 320 and the swing component 310 are arranged in a height direction Z of the swing module 300, and the driving component 320 is located below the swing component 310.

For the swing module 300 provided by the present disclosure, based on the driving component 320 is provided in the accommodating cavity 3302, and the swing component 310 is provided outside the accommodating cavity 3302, and the driving component 320 and the swing component 310 being arranged in the height direction Z of the swing module 300, and being located below the swing component 310, on the one hand, the swing component 310 and the driving component 320 are mounted on the mounting bracket 330, so that the mounting bracket 330 can provide more mounting sites and supporting sites for the swing component 310 and the driving component 320, thereby improving safety and reliability of swing motion of the swing module 300; on the other hand, the mounting bracket 330 can integrate the swing component 310 and the driving component 320 into an integrated module, achieving a simple and compact structure, facilitating assembly and maintenance, and reducing an occupied space of the swing module 300 in the grass collection bracket 100, improving space utilization; moreover, because the swing module 300 performs swing motion at a top of the grass collection bracket 100, a swing operation range of the swing module 300 relative to the grass collection bracket 100 is reduced, a height of a swing axis of the swing module 300 is increased, and swing efficiency is improved.

Exemplarily, in this embodiment, the mounting bracket 330 includes a first bracket 51 and a second bracket 52 that are mated with and fixed to each other. The first bracket 51 is fixed to the grass collection bracket 100, and forms a swing cavity 3303 with the grass collection bracket 100. The swing component 310 is provided in the swing cavity 3303. The first bracket 51 and the second bracket 52 form the accommodating cavity 3302. Thus, on the one hand, the first bracket 51 and the second bracket 52 can provide more mounting sites and supporting sites for the swing component 310 and the driving component 320, improving safety and reliability of operation of the swing module 300; on the other hand, arranging the swing component 310 and the driving component 320 in separate regions realizes a reasonable and compact design, facilitates assembly, and improves working reliability and safety.

In a possible implementation, the first bracket 51 and the second bracket 52 may be detachably fixed to each other by snap-fit connection, screw locking, or the like, thereby facilitating assembly of the swing component 310 and the driving component 320. In a possible implementation, the first bracket 51 and the second bracket 52 may be non-detachably fixed to each other through welding, bonding, integral forming, or the like, which is not specifically limited in the present disclosure.

Exemplarily, in this embodiment, the grass collection bracket 100 includes a bracket body 110 and a mounting protrusion 120. The mounting protrusion 120 protrudes from a top portion of the bracket body 110, and is located at a rear portion of the bracket body 110. The mounting protrusion 120 is internally provided with a swing module 300 configured to be mounted to drive the grass collection box 200 to swing relative to the grass collection bracket 100. Thus, on the one hand, the mounting protrusion 120 can be configured to adjust a mounting height of the swing module 300, avoiding a waste of assembly space of the grass collection bracket 100, achieving a reasonable and compact structural distribution, increasing a height of a rotation point, and improving grass discharging efficiency; on the other hand, providing the swing module 300 at a top of the grass collection bracket 100 reduces a swing area of the swing module 300 within the grass collection bracket 100, reduces an occupied volume of the swing module 300, and improves space utilization.

A mounting cavity 1201 for accommodating the swing module 300 is defined in the mounting protrusion 120. A mounting hole 1101 communicating with the mounting cavity 1201 is provided on a side of the bracket body 110 facing away from the mounting protrusion 120. Thus, based on providing the mounting hole 1101 at a bottom of the bracket body 110, thereby achieving a seamless connection between a top and a side of the mounting protrusion 120, rainwater or debris can slide down along an outer wall of the mounting protrusion 120 under an action of gravity, a risk of rainwater or debris entering the mounting cavity 1201 from the mounting hole 1101 at the bottom of the bracket body 110 is reduced, thereby improving a waterproof and dustproof effect of the mounting protrusion 120, prolonging service life of the swing module 300, facilitating assembly of the swing module 300, and beautifying an appearance of the grass collection bracket 100.

As shown in FIG. 13, in a possible implementation, the grass collection bracket 100 further includes a cover plate 130 covering the mounting hole 1101. Thus, on the one hand, grass clippings or other debris are prevented from entering the mounting cavity 1201, reducing cleaning difficulty of the grass collection bracket 100. On the other hand, the cover plate 130 may also provide a support or mounting position for the swing module 300, thereby improving connection reliability and connection strength between the swing module 300 and the grass collection bracket 100. The cover plate 130 is detachably connected to the bracket body 110, which facilitates installation of the cover plate 130 and the bracket body 110, and facilitates maintenance and replacement operations of the swing module 300. The cover plate 130 and the bracket body 110 may be detachably connected by, but not limited to, a locking structure, a snap-fit, etc. In a possible embodiment, the cover plate 130 and the bracket body 110 may also be non-detachably connected together by bonding or welding, so as to improve connection strength between the cover plate 130 and the bracket body 110, and improve assembly efficiency of the grass collection bracket 100.

In another possible implementation, when the swing module 300 passes through the mounting hole 1101 and is mounted in the mounting cavity 1201, the swing module 300 can cover the mounting hole 1101, thereby preventing grass clippings or other debris from entering the mounting cavity 1201, reducing cleaning difficulty of the grass collection bracket 100, and reducing the number of structural components, making an overall structure compact, and reducing costs.

The first bracket 51 and the mounting protrusion 120 form a swing cavity 3303 accommodating the swing component 310. Exemplarily, in this embodiment, the first bracket 51 divides the mounting cavity 1201 into two cavities in a height direction Z of the swing module 300. One of the cavities is a swing cavity 3303 and is configured to accommodate the swing component 310, and the other cavity is configured to accommodate the driving component 320, the second bracket 52, and part of the first bracket 51. Thus, space in the mounting cavity 1201 can be fully and reasonably utilized, space utilization is improved, and an overall structure becomes more compact.

The mounting bracket 330 is fixed to the mounting protrusion 120. The mounting bracket 330 and the mounting protrusion 120 are fixedly connected together by a locking structure. The locking structure may be, but is not limited to, a bolt, a snap-fit, etc. Exemplarily, in this embodiment, the first bracket 51 may be detachably connected to the mounting protrusion 120 by means including, but not limited to, a locking structure, a snap-fit structure, or the like, thereby facilitating assembly and maintenance of a swing assembly, and reducing processing difficulty. In a possible implementation, the first bracket 51 and the mounting protrusion 120 may also be non-detachably fixedly connected together.

Please refer to FIG. 12, FIG. 13, and FIG. 14 together. Exemplarily, in this embodiment, a movable hole 5101 is defined in the first bracket 51. The swing component 310 includes a swing rod 10 and a transmission gear 15 provided on the swing rod 10. The driving component 320 includes a driving member 41 and an output gear 42 connected to the driving member 41. The output gear 42 is exposed through the movable hole 5101, and meshes with the transmission gear 15. The driving member 41 is configured to drive the output gear 42 to drive the transmission gear 15 to rotate. Thus, based on transmission connection between the driving member 41 and the output gear 42, transmission meshing between the transmission gear 15 and the output gear 42, and the transmission gear 15 being fixed to the swing rod 10, on the one hand, a structure is compact and an occupied volume is small; on the other hand, power transmission speed is improved, and a large load can be withstood; moreover, sliding and impact do not occur during transmission of the output gear 42 and the transmission gear 15, resulting in good stability and reliability; further, a design of the movable hole 5101 can also play a positioning role for assembly of the output gear 42 and the transmission gear 15. A hole wall of the movable hole 5101 is spaced apart from the transmission gear or the output gear 42, so as to avoid interference between the transmission gear or the output gear 42 and the mounting bracket 330 during a swing process of the swing module 300.

In a possible implementation, the first bracket 51 does not cover the output gear 42. For example, the output gear 42 and the transmission gear are provided outside the mounting bracket 330. It should be noted that whether the first bracket 51 is provided with the movable hole 5101 depends on arrangement positions of the transmission gear and the output gear 42 relative to the first bracket 51, which is not specifically limited in the present disclosure.

Please refer to FIG. 12 and FIG. 13 again. The driving member 41 may be, but is not limited to, a driving motor, a hydraulic driver, or a pneumatic driver, etc. The driving component 320 further includes an output shaft 43. The driving member 41 is drivingly connected to the output gear 42 through the output shaft 43. One end of the output gear 42 is connected to the driving member 41, and the other end passes through the first bracket 51 and extends out of the accommodating cavity 3302, and is connected to the output gear 42. Thus, realizing that the driving member 41 drives the output gear 42 to rotate, and the output gear 42 drives the transmission gear 15 to rotate, thereby realizing that the swing module 300 drives the grass collection box 200 to perform a swing motion. A quantity of output shafts 43 corresponds one-to-one to a quantity of output gears 42, and may include one or two, which is not specifically limited in the present disclosure.

Exemplarily, in this embodiment, a radius of the output gear 42 is less than a radius of the transmission gear 15. On the one hand, the radius of the transmission gear 15 is increased, thereby reducing a rotational speed of the transmission gear 15, improving stability of the swing module 300 driving the grass collection box 200 to perform a swing motion; on the other hand, a torque that the transmission gear 15 can withstand is increased, friction between the transmission gear 15 and the output gear 42 is reduced, and transmission efficiency is improved. In a possible implementation, a radius of the output gear 42 may also be greater than or equal to a radius of the transmission gear 15, which is not specifically limited in the present disclosure.

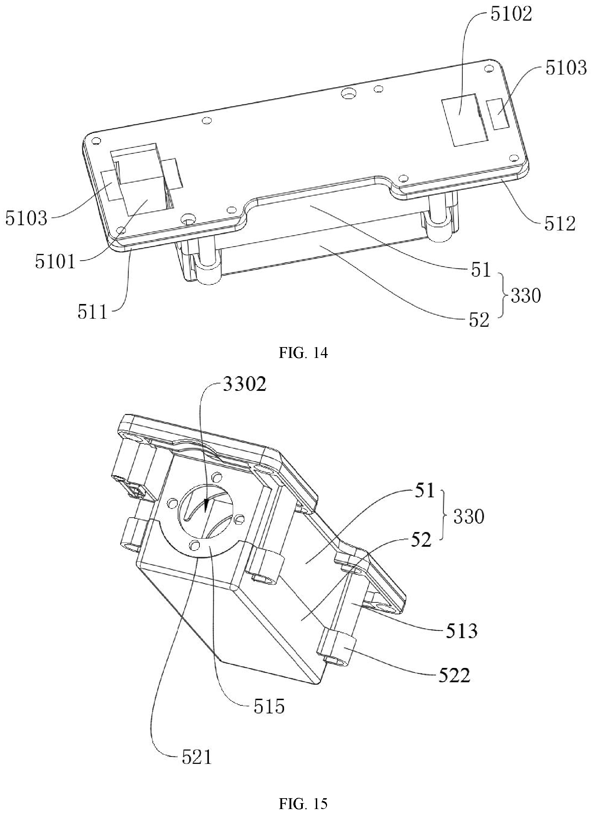

Please refer to FIG. 12 and FIG. 14 again. Exemplarily, in this embodiment, a limiting hole 5102 is further defined in the first bracket 51. The swing component 310 further includes a limiting rod 13 provided on the swing rod 10. The limiting rod 13 swingably extends through the limiting hole 5102. Thus, provision of the limiting rod 13 can limit a swing angle of the swing rod 10, thereby improving safety and reliability of the swing module 300 performing a swing motion.

In a possible implementation, no limiting hole 5102 is defined in the first bracket 51. The limiting rod 13 is provided outside the mounting bracket 330. It should be noted that whether the first bracket 51 is provided with the limiting hole 5102 depends on a arrangement position of the limiting rod 13 relative to the first bracket 51, which is not specifically limited in the present disclosure.

The movable hole 5101 and the limiting hole 5102 are respectively provided at two opposite ends of the first bracket 51 in the width direction Y of the swing module 300, thereby making a combined layout of the swing module 300 reasonable and compact, improving space utilization, and facilitating molding of the movable hole 5101 and the limiting hole 5102. The movable hole 5101 and the limiting hole 5102 are disposed oppositely in the width direction Y of the swing module 300.

Exemplarily, in this embodiment, the first bracket 51 extends outward relative to the second bracket 52 in the width direction Y of the swing module 300 to form a first extension portion 511 and a second extension portion 512. The first extension portion 511 is provided with the movable hole 5101, and the second extension portion 512 is provided with the limiting hole 5102. Thus, on the one hand, it facilitates alignment and installation of the transmission gear and the limiting rod 13, improving assembly efficiency; on the other hand, it avoids a phenomenon of interference between the limiting rod 13 and the driving member 41 during a swinging process.

In a possible implementation, the swing rod 10 is supported on the first bracket 51. A side of the first bracket 51 facing away from the second bracket 52 is defined in a positioning groove 5103. A positioning protrusion 111 movably engaged with the positioning groove 5103 protrudes from the swing rod 10. Thus, on the one hand, this facilitates alignment and assembly of the swing component 310 and the first bracket 51, improving assembly efficiency; on the other hand, the positioning protrusion 111 is movably matched with the positioning groove 5103, so that the first bracket 51 can provide support for the swing rod 10, improving stability and reliability of the swing module 300 performing a swing motion, and prolonging service life of the swing module 300. In a possible implementation, the swing rod 10 is spaced apart from the first bracket 51, thereby ensuring smoothness of swing of the swing rod 10 relative to the mounting bracket.

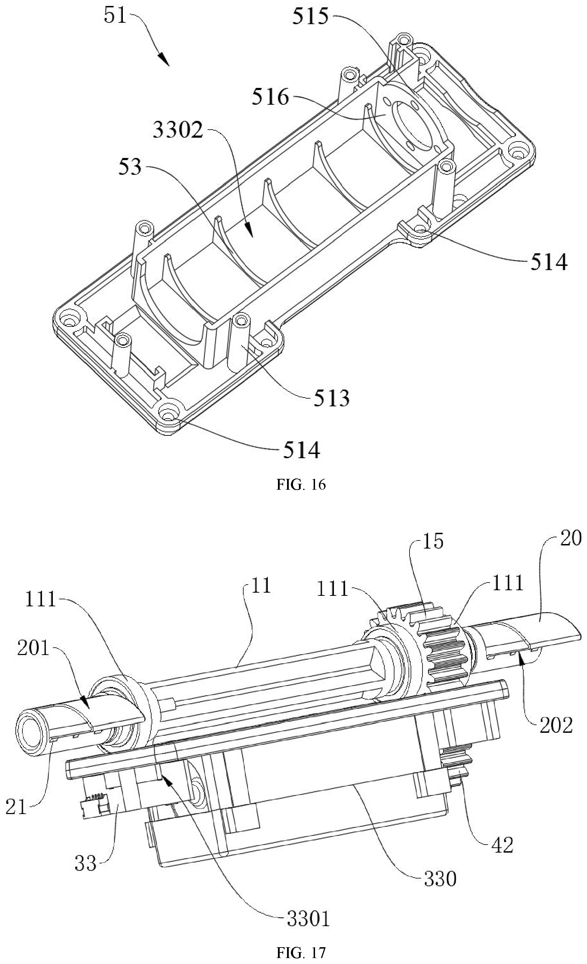

Please refer to FIG. 13, FIG. 15, and FIG. 16 together. FIG. 15 is an enlarged view of the mounting bracket 330 of the swing module 300 in FIG. 12 from a second perspective; FIG. 16 is an enlarged view of the first bracket 51 of the mounting bracket 330 of the swing module 300 in FIG. 12 from a third perspective. In a possible implementation, the first bracket 51 is provided with a limiting structure 515, and the second bracket 52 is provided with a mating structure 521 mating with the limiting structure 515. Thus, alignment and assembly of the first bracket 51 and the second bracket 52 are facilitated.

The first bracket 51 is provided with a fixing plate 516 for fixing the driving member 41. The fixing plate 516 protrudes from the first bracket 51 toward the second bracket 52, and is provided with the limiting structure 515. Thus, based on providing the fixing plate 516 on the first bracket 51, on the one hand, it facilitates installation of the driving member 41, and shortens a distance between the output gear 42 and the transmission gear 15, thereby improving compactness of an overall structure of the mounting bracket 330; on the other hand, since the first bracket 51 is fixed to the grass collection bracket 100, installing the driving member 41 on the first bracket 51 improves reliability of connection between the first bracket 51 and the second bracket 52, and ensures stability and reliability of connection between the driving member 41 and the first bracket 51. In a possible implementation, the driving member 41 may also be fixed to the second bracket 52; or, it may also be fixed to both the first bracket 51 and the second bracket 52 at the same time, which is not specifically limited in the present disclosure.

Exemplarily, in this embodiment, the first bracket 51 is provided with a plurality of fixing columns 513 corresponding to peripheral edges of the accommodating cavity 3302, and the second bracket 52 is provided with lugs 522 corresponding to the fixing columns 513. A locking member passes through the lug 522 and is locked to the fixing column 513, thereby realizing fixed connection between the first bracket 51 and the second bracket. The peripheral edges of the first bracket 51 are provided with a plurality of connection structures 514, and the first bracket 51 is fixedly connected to the grass collection bracket 100 through the connection structures 514. It should be noted that a fixed connection manner between the first bracket 51 and the second bracket 52, and a fixed connection manner between the first bracket 51 and the grass collection bracket 100 may also adopt, but is not limited to, a snap-fit, screw locking, or other manners of fixed connection, which is not specifically limited in the present disclosure.

In a possible implementation, the first bracket 51 and the second bracket 52 are provided with a positioning convex rib 53 corresponding to a position of the accommodating cavity 3302. The positioning convex rib 53 is configured to clamp the driving member 41 between the first bracket 51 and the second bracket 52, thereby ensuring reliability and stability of connection between the driving member 41 and the mounting bracket 330, and improving an overall structural strength of the mounting bracket 330.

Please refer to FIG. 11 and FIG. 12 again. The swing module 300 is provided on the grass collection bracket 100, and is configured to drive the grass collection box 200 to swing relative to the grass collection bracket 100. The swing component 310 includes a swing rod 10 and swing wings 20. The swing wings 20 are provided at each of two ends of the swing rod 10. The swing wings 20 extends along a radial direction of the swing rod 10, and is configured for mounting the grass collection box 200. The driving component 320 is drivingly connected to the swing rod 10, and is configured to drive the swing rod 10 to swing synchronously with the swing wings 20 and the grass collection box 200.

In the swing module 300 provided by the embodiments of the present disclosure, based on the swing wings 20 being provided at two ends of the swing rod 10 respectively, the swing wings 20 extending along a radial direction of the swing rod 10, and being configured to mount the grass collection box 200, and the driving component 320 being configured to drive the swing rod 10 to swing synchronously with the swing wings 20 and the grass collection box 200, thereby realizing an intelligent grass discharging function of the grass collection box 200, reducing an operation range of the swing module 300, and making the structure simple and compact.

Exemplarily, in this embodiment, the swing wings 20 are provided on a side of the swing rod 10 facing the grass collection box 200, thereby making an overall structure of the swing module 300 compact, saving materials, and reducing costs. In a possible implementation, the swing wings 20 may also be provided on a circumferential side of the swing rod 10; or, it may also be provided on two sides of the swing rod 10 in a length direction X of the grass collection apparatus 1000. An arrangement position of the swing wings 20 is not specifically limited in the present disclosure. The swing wings 20 and the swing rod 10 may be non-detachably connected, for example, the swing wings 20 and the swing rod 10 are integrally formed; or, the swing wings 20 and the swing rod 10 are welded, thereby improving connection strength and connection reliability between the swing wings 20 and the swing rod 10. The swing wings 20 and the swing rod 10 may also be detachably connected, thereby facilitating installation, disassembly, post-replacement, and post-maintenance, enriching application scenarios of the grass collection box 200, and improving use flexibility.

The grass collection box 200 is rotatably connected to a rear portion of the grass collection bracket 100. Exemplarily, in this embodiment, the grass collection bracket 100 is detachably connected to the grass collection box 200 through the swing module 300, thereby facilitating installation, disassembly, post-replacement, and post-maintenance, and achieving flexible use. The grass collection box 200 includes a rotating arms 220. The swing rod 10 and the rotating arms 220 are detachably buckled. The swing wings 20 are engaged and abuts against the rotating arms 220, and is configured to drive the grass collection box 200 to swing around a central axis of the swing rod 10. On the one hand, a detachable connection between the grass collection box 200 and the grass collection bracket 100 is realized, which facilitates cleaning and maintenance of the grass collection box 200; on the other hand, engagement and abutment of the swing wings 20 and the rotating arms 220 increase a stress area of the swing component 310 and the grass collection box 200, reducing stress on the rotating arms 220, and prolonging service life of the grass collection box 200. In a possible implementation, the grass collection box 200 is non-detachably connected to the grass collection bracket 100. For example, the swing wings 20 may be non-detachably connected to the rotating arms 220, thereby improving assembly efficiency between the swing wings 20 and the rotating arms 220.

Exemplarily, in this embodiment, the swing wings 20 and the rotating arms 220 are engaged with each other by a specially-shaped structure. Thus, on the one hand, under gravity, the rotating arms 220 presses against the swing wings 20, so that the rotating arms 220 are fixedly positioned relative to the swing wings 20. Therefore, when the driving component 320 drives the swing rod 10 to swing, rotation of the swing rod 10 can drive the swing wings 20 to rotate, and together with the grass collection box 200 mounted on the swing wings 20 to rotate, thereby realizing rotation of the grass collection box 200 relative to the grass collection bracket 100; on the other hand, it facilitates assembly of the rotating arms 220, the swing rod 10, and the swing wings 20. The swing rod 10 can swing in a counterclockwise direction or a clockwise direction relative to the grass collection bracket 100, thereby achieving an opening motion and a closing motion of the grass collection box 200.

It should be noted that, in this embodiment, the swing wings 20 and the rotating arms 220 are configured as special-shaped structures. A specially-shaped structure refers to an irregularly shaped structure, for example, a protruding structure (i.e., the swing wings 20) provided on one side in a radial direction of the swing rod 10 at one end of the swing rod 10, causing the end to form a specially-shaped structure. The protruding structure refers to a structure protruding outward from an end of the swing rod 10 along a radial direction of the swing rod 10, for example, a bump, a strip-shaped structure, a needle-shaped structure, a bent structure, or other structures, which can be flexibly selected according to use requirements. A purpose of providing these structures is to enable the swing wings 20 to drive the rotating arms 220 to rotate when the rotating arms 220 and the swing wings 20 are engaged, and to achieve high connection reliability between the rotating arms 220 and the swing wings 20.

In a possible implementation, the swing wings 20 and the rotating arms 220 may also be engaged in a non-abnormal shape manner. The swing wings 20 and the rotating arms 220 may be fixedly connected through a fixing structure, thereby realizing that the swing rod 10 drives the swing wings 20 to rotate, and rotation of the swing wings 20 drives the grass collection box 200 to rotate. The fixing structure is detachably connected to the swing wings 20 and the grass collection box 200, thereby achieving detachable assembly of the grass collection box 200. In a possible implementation, the swing wings 20 in the swing component 310 may also be omitted, for example, the swing rod 10 is directly fixedly connected to the rotating arms 220.

Please refer to FIG. 11, FIG. 12, and FIG. 17 together. FIG. 17 is a schematic structural diagram of the swing module 300 in FIG. 12 from a second perspective. Exemplarily, in this embodiment, the swing wings 20 include a specially-shaped surface 201 engaging with the rotating arms 220 in a specially-shaped manner. The specially-shaped surface 201 is smoothly fixedly connected to a side wall of the swing rod 10. Thus, a connection portion of the specially-shaped surface 201 of the swing wings 20 and a rotating rod forms a complete outer wall, avoiding a risk of collision in a narrow and crowded space due to an irregular outer wall, or avoiding difficult installation due to an irregular outer wall, and improving assembly efficiency.

Exemplarily, in this embodiment, the grass collection box 200 further includes a box body 210. The rotating arms 220 are provided on the box body 210. The rotating arms 220 protrude from a top of the box body 210. In a height direction Z of the grass collection apparatus 1000, a side of the rotating arms 220 facing the box body 210 is provided with a specially-shaped semi-open groove 2201 mating with the swing wings 20 and the swing rod 10, thereby facilitating a detachable connection between the grass collection box 200 and the swing module 300. An opening of the special-shaped semi-open groove 2201 faces the box body 210. It may be understood that when the user needs to lift the grass collection box 200 upward, the user can flip the grass collection box 200 a certain angle relative to the grass collection bracket 100, and then push forward toward the swing module 300, so that the specially-shaped semi-open groove 2201 of the rotating arms 220 is disengaged from a snap connection with the swing rod 10, and thus the grass collection box 200 can be quickly disassembled from the grass collection bracket 100, and the grass collection box 200 can be lifted upward. The special-shaped semi-open groove 2201 is configured as a specially-shaped groove, and an outer shape of the specially-shaped semi-open groove 2201 matches an outer shape of the swing wings 20, so that swing of the swing module 300 can drive the rotating arms 220 and the box body 210 to swing synchronously, thereby achieving that the grass collection box 200 as a whole flips relative to the grass collection bracket 100.

Exemplarily, in this embodiment, the specially-shaped surface 201 is configured as a curved surface, thereby reducing processing difficulty of the swing wings 20, and improving an overall bearing capacity of the swing wings 20. In a possible implementation, the specially-shaped surface 201 may also be configured as, but is not limited to, a wavy surface, thereby increasing a contact area between the swing wings 20 and the rotating arms 220, reducing stress on the rotating arms 220, and prolonging service life of the grass collection box 200. The specially-shaped surface 201 may also be configured as a flat surface or a surface of other shapes, which is not specifically limited in the present disclosure.

Exemplarily, in this embodiment, a height of each of the swing wings 20 along a height direction Z of the swing module 300 gradually decreases from the swing rod 10 toward a direction away from the swing rod 10. Thus, this adapts to an outer shape of the rotating arms 220, achieves reasonable and compact structural distribution, and ensures a connection area between the swing wings 20 and the swing rod 10 at a connection location while reducing a thickness of the swing wings 20, thereby further strengthening connection strength between the swing wings 20 and the swing rod 10. The swing wings 20 includes a bearing surface 202 facing away from the rotating arms 220. The bearing surface 202 is substantially parallel to a central axis of the swing rod 10. Thus, a phenomenon of the swing rod 10 squeezing the grass collection bracket 100 during rotation is avoided; on the other hand, processing and molding of the swing wings 20 are facilitated.

The swing wings 20 are spaced apart from the grass collection bracket 100. Thus, on the one hand, providing sufficient moving space for swing of the rotating arms 220 avoids interference between the swing module 300 and the grass collection bracket 100 during a rotation process, improving smoothness of rotation of the grass collection box 200; on the other hand, assembly of the swing arm, the swing rod 10, and the swing wings 20 are facilitated; furthermore, a height of a rotation point of the swing module 300 is increased, improving grass discharging efficiency.

In a possible implementation, the swing component 310 further includes a reinforcing rib 21. The reinforcing rib 21 is provided at a connection position between one of the swing wings 20 and the swing rod 10, and is located on a side of one of the swing wings 20 close to the grass collection bracket 100. Thus, overall structural strength of the swing wings 20 is improved, so that the swing wings 20 are not prone to deformation or even fracture during use, ensuring safety and reliability of the swing module 300 driving the grass collection box 200 to perform a swing motion.

The swing rod 10 includes a connecting rod 11 and a swing arms 12 connected to each of two ends of the connecting rod 11. A positioning protrusion 111 is provided at at least one end of the connecting rod 11, and is configured to position a transmission gear 15. The swing wings 20 are provided on each of the swing arms 12. When the swing module 300 applies a swing force to the grass collection box 200, two rotating arms 220 on the box body 210 are evenly stressed, avoiding stress concentration, improving stability of rotation of the grass collection box 200, and prolonging service life of the grass collection box 200, ensuring convenient use and simple operation; on the other hand, top space of the bracket body 110 is reasonably utilized, improving space utilization. Exemplarily, in this embodiment, the positioning protrusion 111 protrudes outward relative to the connecting rod 11 along a radial direction. The transmission gear 15 is provided between two adjacent positioning protrusions 111, thereby avoiding displacement of the transmission gear 15 along an axial direction of the connecting rod 11, and improving reliability and stability of the swing module 300 performing a swing motion. In a possible implementation, the positioning protrusion 111 may be omitted, for example, the transmission gear 15 may be directly fixed to the connecting rod 11.

In a possible implementation, the transmission gear 15 is provided at one end of the connecting rod 11, and an opposite end of the connecting rod 11 away from the transmission gear 15 is provided with a limiting rod 13. The limiting rod 13 is configured to limit a swing angle of the swing arms 12. Thus, on the one hand, a center of gravity of the grass collection apparatus 1000 is balanced, avoiding a risk of warping; on the other hand, a structural layout is reasonable and compact, space utilization is improved, and costs are reduced; moreover, provision of the limiting rod 13 improves safety and reliability of rotation of the grass collection box 200.

The limiting rod 13 extends along a radial direction of the swing rod 10, thereby improving structural compactness and reducing processing difficulty. The limiting rod 13 and the connecting rod 11 may be integrally formed. Alternatively, they may be provided independently of each other. The limiting rod 13 and the connecting rod 11 may be fixedly connected together through, but not limited to, a threaded connection manner, a snap connection manner, a welding manner, an adhesive bonding manner, etc.

In a possible implementation, the transmission gear 15 is provided at two ends of the connecting rod 11, and each transmission gear 15 drives a corresponding swing wing 20 to drive a rotating arm 220 to swing, thereby improving swing efficiency and swing reliability. In a possible implementation, the connecting rod 11 may not be provided with the limiting rod 13. In this embodiment, the swing module 300 may further include a sensing member. The sensing member is configured to detect an operating parameter of a driving member 41 or detect a swing parameter of the swing module 300, thereby ensuring safety and reliability of rotation of the grass collection box 200.

In a possible implementation, at least one thinning groove 1102 is provided on the connecting rod 11. Thus, on the one hand, a center of gravity of the grass collection apparatus 1000 is balanced; on the other hand, material consumption is reduced, and production costs are reduced. Exemplarily, in this embodiment, a plurality of thinning grooves 1102 are defined in the connecting rod 11, and the plurality of thinning grooves 1102 are spaced apart along a circumferential direction of the swing rod 10.

Please refer to FIG. 11 and FIG. 12 again. In a possible implementation, the swing module 300 further includes a sensing component 30. The sensing component 30 is configured to detect a swing angle of the limiting rod 13 relative to the mounting bracket 330. The sensing component 30 is configured to sense a rotation position of the limiting rod 13 relative to the mounting bracket 330 and generate a sensing signal. Thus, the swing module 300 can accurately control the swing module 300 accurately controls an opening angle of the grass collection box 200, avoids a problem of reduced use experience due to transmission failure or presence of transmission gap of the driving component 320, and at the same time avoids damage to the grass collection box 200, the swing module 300, and the grass collection bracket 100, improving reliability and safety of automatic flipping of the grass collection box 200.

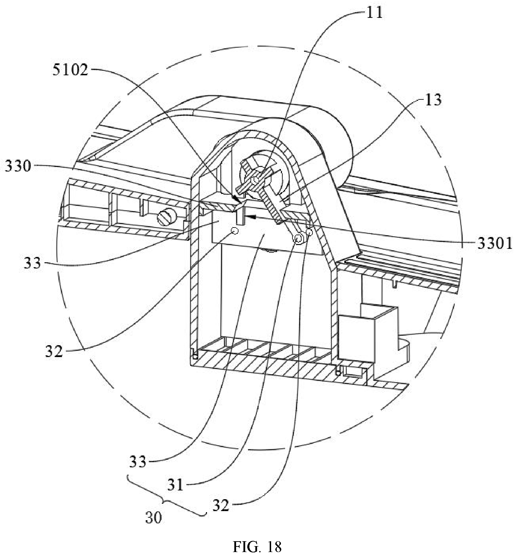

Please refer to FIG. 11, FIG. 17, and FIG. 18 together. FIG. 18 is a partial cross-sectional view of the grass collection apparatus 1000 in FIG. 1 with the driving component 320 omitted from the second perspective. The limiting rod 13 is provided on a side of the connecting rod 11 facing the driving component 320, making a structure distribution of the swing module 300 reasonable and compact, and improving space utilization. The sensing component 30 further includes a first sensing member 31 and a plurality of second sensing members 32. The first sensing member 31 is provided at an end of the limiting rod 13 remote from the swing rod 10. The plurality of second sensing members 32 are fixedly arranged relative to the grass collection bracket 100, and are configured to detect the first sensing member 31. Thus, based on arranging a plurality of second sensing members 32 fixedly arranged relative to the grass collection bracket 100, it achieves that the swing module 300 accurately controls an opening angle of the grass collection box 200.

In a possible implementation, a fixing structure is provided on the first bracket 51 and/or the second bracket 52. The sensing component 30 further includes a first sensing member 31 and a second sensing member 32. The first sensing member 31 is provided at an end of the limiting rod 13 remote from the swing rod 10. The second sensing member 32 is fixed to the fixing structure. Thus, a layout of the sensing component 30 is reasonable, which realizes compactness of the swing module 300, and achieves that the swing module 300 accurately controls an opening angle of the grass collection box 200.

In a possible implementation, the swing component 310, the driving component 320, the sensing component 30, or other elements of the swing module 300 may also be directly mounted on the grass collection bracket 100, which is not specifically limited in the present disclosure.

Please refer to FIG. 11, FIG. 13, and FIG. 18 again. Exemplarily, in this embodiment, the sensing component 30 includes one first sensing member 31 and two second sensing members 32. The first sensing member 31 is provided on the limiting rod 13. The two second sensing members 32 are provided on the mounting bracket 330, and respectively located at opposite sides of a swing region of the limiting rod 13. The limiting rod 13 is rotatable by a preset angle relative to the mounting bracket 330. It should be noted that the preset angle refers to a maximum swing angle of the limiting rod 13 relative to the mounting bracket 330. The maximum swing angle of the limiting rod 13 relative to the mounting bracket 330 is equal to a maximum flipping angle of the grass collection box 200 relative to the grass collection bracket 100. When the limiting rod 13 rotates by a preset angle relative to the mounting bracket 330, one of the first sensing member 31 and the second sensing member 32 is configured to sense the other and generate a sensing signal. One of the first sensing member 31 and the second sensing member 32 is configured as a sensing body, and the other is configured as a sensor, the sensor being configured to sense the sensing body. Exemplarily, in this embodiment, the first sensing member 31 is configured as a sensing body, and the two second sensing members 32 are configured as sensors, so that connection cables connected to the second sensing members 32 can be fixedly arranged relative to the mounting bracket 330, thereby shortening connection cables connected to the second sensing members 32, and avoiding abnormal electrical connection between the second sensing members 32 and connection cables caused by movement of the second sensing members 32 relative to the limiting rod 13, further improving reliability and stability of detection by the second sensing members 32. In some embodiments, the first sensing member 31 may be configured as a sensor, and the two second sensing members 32 may be configured as sensing bodies.

The first sensing member 31 is fixedly arranged relative to the limiting rod 13, so that the first sensing member 31 can rotate synchronously with the limiting rod 13, improving accuracy of detection by the second sensing members 32 of a rotation position of the first sensing member 31 relative to the mounting bracket 330. The first sensing member 31 is embedded in the limiting rod 13, and is located at an end of the limiting rod 13 away from the connecting rod 11. An end of the limiting rod 13 facing away from the connecting rod 11 is provided with an installation groove. The first sensing member 31 is provided in the installation groove, simplifying assembly of the first sensing member 31, improving assembly efficiency, reducing an occupied space of the first sensing member 31, and making an overall structure of the swing module 300 more compact. In a possible implementation, the first sensing member 31 is installed on the limiting rod 13 through adhesive bonding or other structures, which is not specifically limited in the present disclosure.

In a possible implementation, the second sensing members 32 are provided on a side of the mounting bracket 330 facing away from the swing rod 10, that is, the second sensing members 32 and the driving component 320 are provided on the same side of the swing rod 10, so that the second sensing members 32 are hidden below the mounting bracket 330, preventing external water vapor or impurities from damaging the second sensing members 32, improving detection accuracy and reliability of the second sensing members 32, and prolonging service life; on the other hand, improving space utilization, and making an overall structure of the swing module 300 more compact.

The second sensing member 32 is configured to detect the first sensing member 31 to determine an active position of the first sensing member 31, and further determine a swing angle of the swing wings 20. The two second sensing members 32 are spaced apart along a swing direction of the limiting rod 13. Specifically, the two second sensing members 32 may be correspondingly located at opposite sides of the swing region of the limiting rod 13. The first sensing member 31 provided on the limiting rod 13 can move away from one of the second sensing members 32 and approach the other second sensing member 32 driven by the swing rod 10. When the first sensing member 31 rotates to a position directly facing the second sensing member 32, the second sensing member 32 can generate a sensing signal. The grass collection apparatus 1000 controls the driving member 41 to stop driving according to the sensing signal. Thus, cooperation of the driving member 41 and the sensing component 30 can accurately control an opening angle of the grass collection box 200, avoids a problem of reduced use experience due to transmission failure or presence of transmission gap of the driving component 320, and at the same time avoids damage to the grass collection box 200 and the driving component 320, thereby improving reliability and safety of automatic flipping of the swing module 300.

The sensing component 30 further includes a circuit board 33 fixedly connected to the fixing structure, and the second sensing members 32 are provided on the circuit board 33.

A clamping groove 3301 is defined in the first bracket 51 at a position adjacent to the limiting hole 5102 to form the fixing structure, and the circuit board 33 is clamped in the clamping groove 3301.

In a possible implementation, the sensing component 30 further includes a circuit board 33. The second sensing members 32 are provided on the circuit board 33, and is fixedly connected to the fixing structure. Exemplarily, in this embodiment, the circuit board 33 is fixedly connected to the mounting bracket 330. Specifically, a clamping groove 3301 is defined in a position of the first bracket 51 close to the limiting hole 5102 to form the fixing structure, and the circuit board 33 is clamped in the clamping groove 3301. Thus, on the one hand, assembly of the circuit board 33 and the mounting bracket is shortened, improving assembly efficiency; on the other hand, the circuit board 33 does not increase a dimension of the swing module 300 in the height direction Z, improving space utilization. In a possible implementation, a positioning column protrudes from an inside of the clamping groove 3301, and the circuit board 33 is provided with a positioning hole mating with the positioning column, thereby facilitating assembly, and improving reliability and stability of connection between the circuit board 33 and the mounting bracket 330.

Two second sensing members 32 are provided on the same side of the circuit board 33 facing the limiting rod 13, and are electrically connected to the circuit board 33, thereby simplifying a connection circuit. The circuit board 33 and a main control board of the grass collection apparatus 1000 may be provided independently of each other; or, they may also be integrated with each other. Two second sensing members 32 are provided at two opposite ends of the circuit board 33 in the length direction X of the grass collection apparatus 1000. A central angle corresponding to a connecting line between the two second sensing members 32 and a central axis of the swing rod 10 matches a flipping angle of the grass collection box 200.

The second sensing members 32 are spaced apart from the limiting rod 13. In other words, an end surface of one of the second sensing members 32 facing away from the circuit board 33 is spaced apart from an end surface of the limiting rod 13 facing the circuit board 33, thereby avoiding interference with swing motion of the swing module 300.

The limiting rod 13 may cooperate with the sensing component 30 to control swing of the swing rod 10. It is understandable that the limiting rod 13 may cooperate with the sensing component 30 to change a swing direction of the swing rod 10. Exemplarily, when the limiting rod 13 is located at a first limit position or a second limit position, the second sensing members 32 can sense the first sensing member 31 and generate a sensing signal. When the second sensing members 32 sense the first sensing member 31, the circuit board 33 can control the driving member 41 to stop a driving operation, and when restarting, controls the driving member 41 to drive in a reverse direction. It is understandable that reverse driving of the driving member 41 can cause a rotation direction of an output shaft 43 to be opposite to a rotation direction before stopping rotation, thereby changing a swing direction of the swing rod 10.

Exemplarily, in this embodiment, the first sensing member 31 is a magnetic component, and the second sensing members 32 are a Hall sensor. When the Hall sensor can sense magnetic induction intensity information of the magnetic component, a corresponding sensing signal is generated. At this time, the Hall sensor can send the generated sensing signal to the circuit board 33, and the circuit board 33 can control the driving member 41 to stop a driving operation according to a received sensing signal. In some embodiments, the second sensing members 32 may also include, but is not limited to, a distance sensor, an optocoupler sensor, a pressure sensor, etc. The distance sensor includes, but is not limited to, a displacement sensor, a proximity sensor, an ultrasonic sensor, etc.

In a possible implementation, the sensing component 30 may not include the first sensing member 31. For example, when the second sensing members 32 are configured as an optocoupler sensor, an end of the limiting rod 13 away from the connecting rod 11 can function as the first sensing member 31. When the end of the limiting rod 13 away from the connecting rod 11 blocks the optocoupler sensor, the optocoupler sensor generates a sensing signal; when the end of the limiting rod 13 away from the connecting rod 11 exposes the optocoupler sensor, the optocoupler sensor cannot generate a sensing signal. In a possible implementation, a quantity of the second sensing members 32 may include one, three, or more than three, which is not specifically limited in the present disclosure.

The limiting rod 13 has a first limit position and a second limit position. The first limit position and the second limit position are respectively two positions where the limiting rod 13 swings correspondingly to the two second sensing members 32. When the grass collection apparatus 1000 is in a grass collection state, the limiting rod 13 is located at the first limit position, and the limiting rod 13 is located at an initial position. When the grass collection apparatus 1000 enters a grass discharging state from a grass collection state, the limiting rod 13 swings from the first limit position to the second limit position. A magnetic component provided on the limiting rod 13 is set directly facing one of the Hall sensors. After the limiting rod 13 swings, it drives the magnetic component to rotate to a position directly facing the other Hall sensor. A controller controls a driving member 41 to stop working. At this time, the swing wings 20 drive a grass collection box 200 to flip outward relative to a grass collection bracket 100, so that the grass collection apparatus 1000 is in a grass discharging state, thereby achieving that the grass collection box 200 flips and dumps grass clippings. When the grass collection apparatus 1000 enters the grass collection state from the grass discharging state, when the driving member 41 restarts, the controller can control the driving member 41 to drive in a reverse direction. At this time, the limiting rod 13 can rotate in a reverse direction, driving the limiting rod 13 to move from the second limit position to the first limit position. At this time, the swing wings 20 drive the grass collection box 200 to flip inward relative to the grass collection bracket 100, so that the grass collection box 200 is restored to an initial position, that is, it is in a grass collection state.

A sensing component 30 of the present disclosure includes a first sensing member 31 and a plurality of second sensing members 32. The first sensing member 31 is provided on the limiting rod 13. A swing rod 10 drives a limiting rod 13 together with the first sensing member 31 to rotate. When the first sensing member 31 rotates to a position directly facing any one of the second sensing members 32, the second sensing members 32 oppositely provided with respect to the first sensing member 31 can sense the first sensing member 31 and generate a sensing signal. A circuit board 33 receives the sensing signal generated by the second sensing members 32, and controls a driving member 41 to stop driving. The circuit board 33 is also configured to control the driving member 41 to drive in a reverse direction when the driving member 41 restarts, thereby realizing accurate control of an opening angle of the grass collection box 200, avoiding a problem of reduced use experience due to transmission failure or presence of transmission gap of a driving component 320, and at the same time avoiding damage to the grass collection box 200 and the driving component 320, improving reliability and safety of automatic flipping of the grass collection box 200.

Please refer to FIG. 11 again. The embodiments of the present disclosure further provide a lawn mowing device, comprising a lawn mower and the above grass collection box 200 or the above grass collection apparatus 1000. The grass collection box 200 or the grass collection apparatus 1000 is connected to a rear portion of the lawn mower. The lawn mowing device may include, but is not limited to, a walk-behind type, a riding type, and a fully automatic intelligent lawn mowing device, which is not limited in the present disclosure. The lawn mowing device can move on the ground. For example, the lawn mowing device can move on the ground under pushing of a user. For another example, the lawn mowing device itself has a moving capability, and can automatically move on the ground through a driving mechanism.

The lawn mower includes, but is not limited to, a frame, a cutting mechanism, and an elevating mechanism. The grass collection apparatus 1000 or the grass collection box 200 is provided at a rear portion of the frame. Exemplarily, the grass collection bracket 100 is detachably provided on the frame of the lawn mowing device, so that the grass collection apparatus 1000 can be detached from the frame of the lawn mowing device, which is convenient for maintenance and replacement, and enriches different application scenarios of the lawn mowing device, such as a mowing scenario, a grass collecting scenario, or a mowing and grass collecting scenario. In some embodiments, the grass collection bracket 100 may also be non-detachably provided on the frame of the lawn mowing device, which is not specifically limited in the present disclosure. The cutting mechanism and the elevating mechanism are provided on the frame. The elevating mechanism is configured to drive the cutting mechanism to move along a height direction Z of the grass collection apparatus 1000. The cutting mechanism is configured to cut grass materials.

Those skilled in the art can clearly understand that, for convenience and brevity of description, specific operating processes of the systems, apparatuses and units described above may refer to corresponding processes in the foregoing method embodiments, which will not be described in detail herein.. In the foregoing embodiments, descriptions of each embodiment have their own focus. For parts that are not described in derear portion in a certain embodiment, refer to relevant descriptions of other embodiments.

It should be noted that, for the foregoing method embodiments, for the sake of simple description, they are all expressed as a series of action combinations. However, those skilled in the art should know that the present disclosure is not limited by the described sequence of actions, because according to the present disclosure, some steps may be performed in other sequences or simultaneously. Secondly, those skilled in the art should also know that the embodiments described in the specification are all preferred embodiments, and involved actions and modules are not necessarily required by the present disclosure.

In several embodiments provided in the present disclosure, it should be understood that the disclosed systems and apparatuses can be implemented in other ways. For example, the apparatus embodiments described above are merely illustrative.

The above are only specific implementations of the present disclosure, but the scope of protection of the present disclosure is not limited thereto. Any modifications or replacements that can be easily thought of by any person skilled in the art within the technical scope disclosed in the present disclosure should be covered within the scope of protection of the present disclosure. Therefore, the scope of protection of the present disclosure shall be subject to the scope of protection of the claims.

## Claims

1. A grass collection apparatus, comprising a grass collection bracket, a grass collection box, and a swing module, wherein the grass collection box is rotatably connected to the grass collection bracket through the swing module, wherein the grass collection bracket comprises:
a bracket body configured to be fixedly connected to a lawn mower; and
a mounting protrusion protruding from a top portion of the bracket body, and located at a rear portion of the bracket body, wherein the swing module is disposed in the mounting protrusion.

2. The grass collection apparatus according to claim 1, wherein a mounting cavity for accommodating the swing module is defined in the mounting protrusion, and a mounting hole communicating with the mounting cavity is provided on a side of the bracket body facing away from the mounting protrusion.

3. The grass collection apparatus according to claim 2, wherein the grass collection bracket further comprises a cover plate covering the mounting hole.

4. The grass collection apparatus according to claim 2, wherein along a width direction of the grass collection bracket, a shaft hole communicating with the mounting cavity is defined at an end of the mounting protrusion facing away from the bracket body, and two ends of the swing module extend through the shaft hole and protrude from the shaft hole.

5. The grass collection apparatus according to claim 1, wherein the bracket body comprises a first bracket body and a second bracket body connected to the first bracket body, the second bracket body protrudes beyond a rear portion of the first bracket body in a length direction of the grass collection bracket, and is suspended relative to a bottom of the first bracket body in a height direction of the grass collection bracket, and the mounting protrusion is provided on the second bracket body.

6. The grass collection apparatus according to claim 1, wherein a top surface of the mounting protrusion facing away from the bracket body is configured as a curved surface.

7. The grass collection apparatus according to claim 1, wherein a detector is provided on a side wall of the mounting protrusion facing the grass collection box.

8. The grass collection apparatus according to claim 1, wherein the grass collection bracket further comprises a handle, one end of the handle is fixed to the mounting protrusion, and the other end of the handle is fixed to the bracket body.

9. The grass collection apparatus according to claim 8, wherein a positioning structure is provided on the bracket body and/or the mounting protrusion, and a guiding structure mating with the positioning structure is provided on the handle.

10. The grass collection apparatus according to claim 9, wherein the positioning structure comprises a positioning column and/or a positioning hole, the guiding structure is configured as a connecting rod engaged with the positioning column and/or inserted into the positioning hole, and the positioning column is locked to the connecting rod by a locking structure.

11. The grass collection apparatus according to claim 10, wherein a limiting groove is defined in the mounting protrusion, one end of the handle is inserted into the limiting groove, and the positioning structure is provided in the limiting groove.

12. The grass collection apparatus according to claim 9, wherein a limiting protrusion is provided on a side of the mounting protrusion facing the handle, the limiting protrusion is provided with a limiting groove, one end of the handle is inserted into the limiting groove and is limited by the limiting protrusion in a height direction of the grass collection bracket.

13. The grass collection apparatus according to claim 8, wherein the grass collection bracket further comprises a top cover, the top cover covers a top portion of the bracket body, and the mounting protrusion and the handle pass through and protrude from the top cover.

14. The grass collection apparatus according to claim 1, wherein the grass collection bracket further comprises two mounting arms, the two mounting arms are provided on two sides of the bracket body in a width direction of the grass collection bracket, and are configured for mounting a floating mechanism.

15. The grass collection apparatus according to claim 1, wherein a mounting space is provided on a side of the bracket body facing away from the mounting protrusion, and the mounting space is configured for mounting the lawn mower.

16. The grass collection apparatus according to claim 1, wherein the grass collection box comprises a box body and a carrying handle, a rotating arm protrudes from a top of the box body, the rotating arm is configured to be rotatably connected to the swing module of the grass collection apparatus, and the rotating arm, together with the box body, is driven by the swing module to pivot relative to the grass collection bracket of the grass collection apparatus; and the carrying handle is provided on the box body and is located close to the rotating arm, and the carrying handle is configured to drive the box body to pivot relative to the grass collection bracket.

17. The grass collection apparatus according to claim 16, wherein the rotating arms are provided at two side portions of the box body in a width direction of the grass collection box, and the carrying handle is located between the two rotating arms.

18. The grass collection apparatus according to claim 16, wherein the box body comprises a box housing, a box cover, and a pressing cover, the box cover is fixedly connected to the box housing and forms a grass collection cavity, the pressing cover is provided in the grass collection cavity and forms an enclosed space with the box cover, the carrying handle comprises a gripping portion and a bent portion, the gripping portion is located outside the grass collection cavity, and the bent portion is bent relative to the gripping portion and is provided in the enclosed space.

19. The grass collection apparatus according to claim 18, wherein a side of the box body facing the grass collection bracket is provided with a first clearance groove, and the rotating arm extends from the box body toward the swing module and is located above the first clearance groove.

20. The grass collection apparatus according to claim 19, wherein a second clearance groove is formed by recessing in a groove bottom wall of the first clearance groove of the box body, and the bent portion passes through a groove side wall of the second clearance groove and extends into the enclosed space.

21. The grass collection apparatus according to claim 20, wherein the second clearance groove has a trapezoidal shape.

22. The grass collection apparatus according to any one of claims 18-21, wherein the bent portion comprises a first bent section and a second bent section, the first bent section is connected between the gripping portion and the second bent section, the first bent section is located at one side of the gripping portion in a width direction of the grass collection apparatus, and the second bent section and the gripping portion are located on the same side of the first bent section in a length direction of the grass collection box.

23. The grass collection apparatus according to any one of claims 18-21, wherein the gripping portion comprises a first gripping section and a second gripping section connected between the first gripping section and the bent portion, the first gripping section is spaced apart from the box body, and the second gripping section is inclined relative to a top wall of the box body.

24. The grass collection apparatus according to claim 16, wherein in a height direction of the grass collection box, a side of the rotating arm facing the box body is provided with a semi-open groove mating with the swing module.

25. The grass collection apparatus according to claim 18, wherein the grass collection apparatus further comprises a detector, and the detector is provided at a top portion of a side of the grass collection bracket facing the grass collection box, and is located on a side of the box body facing away from the rotating arm.

26. The grass collection apparatus according to claim 25, wherein a side wall of the detector facing the pressing cover is inclined in a direction away from the pressing cover.

27. The grass collection apparatus according to claim 1, wherein the swing module comprises a mounting bracket, a swing component, and a driving component, an accommodating cavity is provided in the mounting bracket, and the mounting bracket is fixed to the grass collection bracket;
the swing component is provided on the mounting bracket and is located outside the accommodating cavity; and
the driving component is provided in the accommodating cavity and is drivingly connected to the swing component, and the driving component and the swing component are arranged in a height direction of the swing module, and the driving component is located below the swing component.

28. The grass collection apparatus according to claim 27, wherein the mounting bracket comprises a first bracket and a second bracket fixedly coupled to each other, the first bracket is fixed to the grass collection bracket and forms a swing cavity with the grass collection bracket, the swing component is provided in the swing cavity, and the first bracket and the second bracket form the accommodating cavity.

29. The grass collection apparatus according to claim 28, wherein a movable hole is provided on the first bracket, the swing component comprises a swing rod and a transmission gear provided on the swing rod, the driving component comprises a driving member and an output gear connected to the driving member, the output gear is exposed to the movable hole and meshes with the transmission gear, and the driving member is configured to drive the output gear to drive the transmission gear to rotate.

30. The grass collection apparatus according to claim 29, wherein a limiting hole is further provided on the first bracket, the swing component further comprises a limiting rod provided on the swing rod, and the limiting rod swingably extends through the limiting hole.

31. The grass collection apparatus according to claim 30, wherein the movable hole and the limiting hole are respectively provided at two opposite ends of the first bracket in a width direction of the swing module.

32. The grass collection apparatus according to claim 30, wherein the first bracket extends outward relative to the second bracket in a width direction of the swing module and forms a first extension portion and a second extension portion, the first extension portion is provided with the movable hole, and the second extension portion is provided with the limiting hole.

33. The grass collection apparatus according to claim 30, wherein the swing module further comprises a sensing component, and the sensing component is configured to sense a swing angle of the limiting rod relative to the mounting bracket.

34. The grass collection apparatus according to claim 33, wherein a fixing structure is provided on the first bracket and/or the second bracket, the sensing component further comprises a first sensing member and a second sensing member, the first sensing member is provided at an end of the limiting rod away from the swing rod, and the second sensing member is fixed to the fixing structure.

35. The grass collection apparatus according to claim 34, wherein the sensing component further comprises a circuit board fixedly connected to the fixing structure, and the second sensing member is provided on the circuit board.

36. The grass collection apparatus according to claim 35, wherein a clamping groove is defined in a position of the first bracket close to the limiting hole to form the fixing structure, and the circuit board is clamped in the clamping groove.

37. The grass collection apparatus according to claim 29, wherein a side of the first bracket facing away from the second bracket is defined in a positioning groove, and a positioning protrusion movably mating with the positioning groove protrudes from the swing rod.

38. The grass collection apparatus according to claim 29, wherein the first bracket is provided with a limiting structure, and the second bracket is provided with a mating structure mating with the limiting structure.

39. The grass collection apparatus according to claim 38, wherein the first bracket is provided with a fixing plate for fixing the driving member, the fixing plate protrudes from the first bracket toward the second bracket, and is provided with the limiting structure.

40. The grass collection apparatus according to claim 28, wherein the swing module is configured to drive the grass collection box to swing relative to the grass collection bracket, the swing component comprises a swing rod and swing wings, the swing wings are provided at two ends of the swing rod respectively, the swing wings extends along a radial direction of the swing rod, and is configured for detachable mounting of the grass collection box; and
the driving component is drivingly connected to the swing rod, and is configured to drive the swing rod to swing synchronously with the swing wings and the grass collection box.

41. The grass collection apparatus according to claim 40, wherein the swing wings are provided on a side of the swing rod facing the grass collection box.

42. The grass collection apparatus according to claim 40, wherein a height of each of the swing wings along a height direction of the swing module gradually decreases from the swing rod toward a direction away from the swing rod.

43. The grass collection apparatus according to claim 40, wherein the swing component further comprises a reinforcing rib, and the reinforcing rib is provided at a connection position between one of the swing wings and the swing rod, and is located on a side of one of the swing wing close to the grass collection bracket.

44. The grass collection apparatus according to claim 40, wherein the driving component comprises a driving member and an output gear, the output gear is drivingly connected to the driving member, the swing component further comprises a transmission gear, the transmission gear meshes with the output gear, and the transmission gear is fixed to the swing rod.

45. The grass collection apparatus according to claim 44, wherein the swing rod comprises a connecting rod and swing arms connected to each of two ends of the connecting rod, at least one end of the connecting rod is provided with a positioning protrusion for positioning the transmission gear, and each of the swing arms are provided with the swing wings.

46. A lawn mowing device, comprising a lawn mower and the grass collection apparatus according to any one of claims 1-45, wherein the grass collection apparatus is mounted on the lawn mower.
